(19) Europäisches Patentamt
European Patent Office
Office européen des brevets

(11) **EP 4 580 081 A1**

(12) **EUROPEAN PATENT APPLICATION**
published in accordance with Art. 153(4) EPC

(43) Date of publication:
**02.07.2025 Bulletin 2025/27**

(21) Application number: **23873246.5**

(22) Date of filing: **27.09.2023**

(51) International Patent Classification (IPC):
*H04B 7/06* (2006.01)          *H04B 7/08* (2006.01)
*H04L 5/14* (2006.01)          *H04W 88/08* (2009.01)

(52) Cooperative Patent Classification (CPC):
**H04B 7/06; H04B 7/08; H04L 5/14; H04W 88/08**

(86) International application number:
**PCT/KR2023/015098**

(87) International publication number:
**WO 2024/072138 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.09.2022 KR 20220124609**

(71) Applicant: **Samsung Electronics Co., Ltd.
Suwon-si, Gyeonggi-do 16677 (KR)**

(72) Inventors:
• **CHOI, Kyungjun
Suwon-si, Gyeonggi-do 16677 (KR)**
• **ABEBE, Ameha Tsegaye
Suwon-si, Gyeonggi-do 16677 (KR)**
• **JANG, Youngrok
Suwon-si, Gyeonggi-do 16677 (KR)**
• **JI, Hyoungju
Suwon-si, Gyeonggi-do 16677 (KR)**
• **SHIM, Jaeyeon
Suwon-si, Gyeonggi-do 16677 (KR)**
• **CHOE, Hyemin
Suwon-si, Gyeonggi-do 16677 (KR)**

(74) Representative: **Nederlandsch Octrooibureau
P.O. Box 29720
2502 LS The Hague (NL)**

(54) **METHOD AND DEVICE FOR SELECTING ANTENNA MODE FOR FULL DUPLEX COMMUNICATION IN WIRELESS COMMUNICATION SYSTEM**

(57)    The present disclosure relates to a 5G or 6G communication system for supporting higher data transmission rates. Specifically, the present disclosure relates to a method and device for selecting an antenna mode for full duplex communication between a base station and a terminal capable of performing an operation according to the antenna mode of the base station.

FIG. 13

**Description**

**[Technical Field]**

The disclosure relates to operations of a terminal and a base station in a wireless communication system. Specifically, the disclosure relates to a terminal device capable of performing operations according to an antenna mode of a base station.

**[Background Art]**

5G mobile communication technology defines a wide frequency band to enable a fast transmission speed and new services, and may be implemented not only in a frequency ('sub 6 GHz') band of 6 GHz or less such as 3.5 GHz, but also in an ultra high frequency band ('above 6 GHz') called a mmWave such as 28 GHz and 39 GHz. Further, in the case of 6G mobile communication technology, which is referred to as a beyond 5G system, in order to achieve a transmission speed that is 50 times faster than that of 5G mobile communication technology and ultra-low latency reduced to 1/10 compared to that of 5G mobile communication technology, implementations in terahertz bands (e.g., such as 95 GHz to 3 terahertz (3 THz) band) are being considered.

In the early days of 5G mobile communication technology, with the goal of satisfying the service support and performance requirements for an enhanced mobile broadband (eMBB), ultra-reliable low-latency communications (URLLC), and massive machine-type communications (mMTC), standardization has been carried out for beamforming and massive multi-input multi-output (MIMO) for mitigating a path loss of radio waves in an ultra-high frequency band and increasing a propagation distance of radio waves, support for various numerologies (multiple subcarrier spacing operation, and the like) for efficient use of ultra-high frequency resources and dynamic operation for slot formats, initial access technology for supporting multi-beam transmission and broadband, a definition and operation of a band-width part (BWP), a new channel coding method such as a low density parity check (LDPC) code for large capacity data transmission and a polar code for high reliable transmission of control information, L2 pre-processing, and network slicing that provides a dedicated network specialized for specific services.

Currently, discussions are ongoing to improve initial 5G mobile communication technology and enhance a performance thereof in consideration of services in which 5G mobile communication technology was intended to support, and physical layer standardization for technologies such as vehicle-to-everything (V2X) for assisting driving determination of an autonomous vehicle and increasing user convenience based on a location and state information of the vehicle transmitted by the vehicle, new radio unlicensed (NR-U) for the purpose of a system operation that meets various regulatory requirements in unlicensed bands, NR UE power saving, a non-terrestrial network (NTN), which is direct UE-satellite communication for securing coverage in regions where communication with a terrestrial network is impossible, and positioning is in progress.

Further, standardization in the field of air interface architecture/protocol for technologies such as industrial Internet of things (IIoT) for supporting new services through linkage and convergence with other industries, integrated access and backhaul (IAB) that provides nodes for expanding network service regions by integrating wireless backhaul links and access links, mobility enhancement including conditional handover and dual active protocol stack (DAPS) handover, and 2-step RACH for NR that simplifies a random access procedure is also in progress, and standardization in the field of system architecture/service for 5G baseline architecture (e.g., service based architecture, service based interface) for applying network functions virtualization (NFV) and software-defined networking (SDN) technologies, mobile edge computing (MEC) that receives services based on a location of a UE, and the like is also in progress.

When such a 5G mobile communication system is commercialized, connected devices in an explosive increase trend will be connected to communication networks; thus, it is expected that function and performance enhancement of a 5G mobile communication system and integrated operation of connected devices will be required. To this end, new research on eXtended reality (XR) for efficiently supporting augmented reality (AR), virtual reality (VR), mixed reality (MR), and the like, 5G performance improvement and complexity reduction using artificial intelligence (AI) and machine learning (ML), AI service support, metaverse service support, and drone communication will be conducted.

Further, the development of such a 5G mobile communication system will be the basis for the development of full duplex technology for improving frequency efficiency and system network of 6G mobile communication technology, satellite, AI-based communication technology that utilizes artificial intelligence (AI) from a design stage and that realizes system optimization by internalizing end-to-end AI support functions, and next generation distributed computing technology that realizes complex services beyond the limits of UE computing capabilities by utilizing ultra-high-performance communication and computing resources as well as a new waveform for ensuring coverage in a terahertz band of 6G mobile communication technology, full dimensional MIMO (FD-MIMO), multi-antenna transmission technologies such as an array antenna and large scale antenna, metamaterial-based lenses and antennas for improving coverage of terahertz band signals, high-dimensional spatial multiplexing technology using orbital angular momentum (OAM), and reconfigurable intelligent surface (RIS) technology.

As various services may be provided according to the above description and the development of a wireless communication system, a method for smoothly providing these services is required.

**[Disclosure of Invention]**

**[Technical Problem]**

The disclosed embodiment provides a device and method capable of effectively providing a service in a mobile communication system.

**[Solution to Problem]**

According to an embodiment of the disclosure for achieving the above-described technical problem, a method performed by a terminal of a communication system may include receiving first beam related configuration information from a base station; identifying a beam related configuration for each symbol based on the first beam related configuration information; receiving a downlink in a first symbol based on a beam related configuration related to the first symbol; and transmitting an uplink in a second symbol based on a beam related configuration related to the second symbol, wherein the first symbol may be configured to correspond to a downlink symbol or a subband non-overlapping full duplex (SBFD) symbol, the second symbol may be configured to correspond to an uplink symbol or the SBFD symbol, and the first beam related configuration information may include at least one of a first beam related configuration corresponding to an antenna panel of the base station related to the downlink symbol, a second beam related configuration corresponding to an antenna panel of the base station related to the uplink symbol, or a third beam related configuration corresponding to an antenna panel of the base station related to the SBFD symbol.

Further, according to an embodiment of the disclosure, a method performed by a base station of a communication system may include transmitting first beam related configuration information to a terminal; identifying a beam related configuration for each symbol according to the first beam related configuration information; transmitting a downlink in a first symbol based on a beam related configuration related to the first symbol; and receiving an uplink in a second symbol based on a beam related configuration related to the second symbol, wherein the first symbol may be configured to correspond to a downlink symbol or a subband non-overlapping full duplex (SBFD) symbol, the second symbol may be configured to correspond to an uplink symbol or the SBFD symbol, and the first beam related configuration information may include at least one of a first beam related configuration corresponding to an antenna panel of the base station related to the downlink symbol, a second beam related configuration corresponding to an antenna panel of the base station related to the uplink symbol, or a third beam related configuration corresponding to an antenna panel of the base station related to the SBFD symbol.

Further, according to an embodiment of the disclosure, a terminal of a communication system may include a transceiver; and a controller, wherein the controller may be configured to receive first beam related configuration information from a base station, to identify a beam related configuration for each symbol based on the first beam related configuration information, to receive a downlink in a first symbol based on a beam related configuration related to the first symbol, and to transmit an uplink in a second symbol based on a beam related configuration related to the second symbol, wherein the first symbol may be configured to correspond to a downlink symbol or a subband non-overlapping full duplex (SBFD) symbol, the second symbol may be configured to correspond to an uplink symbol or the SBFD symbol, and the first beam related configuration information may include at least one of a first beam related configuration corresponding to an antenna panel of the base station related to the downlink symbol, a second beam related configuration corresponding to an antenna panel of the base station related to the uplink symbol, or a third beam related configuration corresponding to an antenna panel of the base station related to the SBFD symbol.

Further, according to an embodiment of the disclosure, a base station of a communication system may include a transceiver; and a controller, wherein the controller may be configured to transmit first beam related configuration information to a terminal, to identify a beam related configuration for each symbol according to the first beam related configuration information, to transmit a downlink in a first symbol based on a beam related configuration related to the first symbol, and to receive an uplink in a second symbol based on a beam related configuration related to the second symbol, wherein the first symbol may be configured to correspond to a downlink symbol or a subband non-overlapping full duplex (SBFD) symbol, the second symbol may be configured to correspond to an uplink symbol or the SBFD symbol, and the first beam related configuration information may include at least one of a first beam related configuration corresponding to an antenna panel of the base station related to the downlink symbol, a second beam related configuration corresponding to an antenna panel of the base station related to the uplink symbol, or a third beam related configuration corresponding to an antenna panel of the base station related to the SBFD symbol.

**[Advantageous Effects of Invention]**

The disclosed embodiment provides a device and method capable of effectively providing a service in a mobile communication system.

**[Brief Description of Drawings]**

FIG. 1 is a diagram illustrating a basic structure of a time-frequency domain in a wireless communication system according to an embodiment of the disclosure.

FIG. 2 is a diagram illustrating a frame, subframe, and slot structure in a wireless communication system according to an embodiment of the disclosure.

FIG. 3 is a diagram illustrating an example of a bandwidth part configuration in a wireless communication system according to an embodiment of the disclosure.

FIG. 4 is a diagram illustrating an example of a control area configuration of a downlink control channel in a wireless communication system according to an embodiment of the disclosure.

FIG. 5 is a diagram illustrating a structure of a downlink control channel in a wireless communication system according to an embodiment of the disclosure.

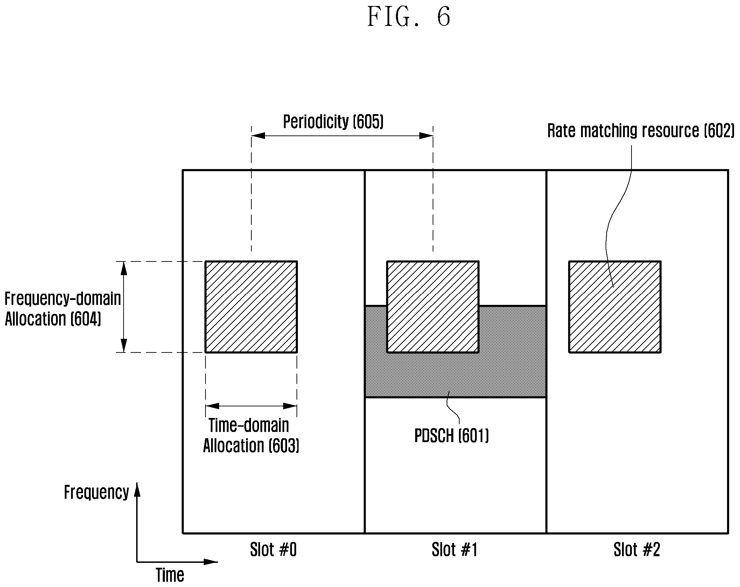

FIG. 6 is a diagram illustrating a method in which a base station and a terminal transmit and receive data in consideration of downlink data channels and rate matching resources in a wireless communication system according to an embodiment of the disclosure.

FIG. 7 is a diagram illustrating an example of frequency axis resource assignment of a PDSCH in a wireless communication system according to an embodiment of the disclosure.

FIG. 8 is a diagram illustrating an example of time axis resource assignment of a PDSCH in a wireless communication system according to an embodiment of the disclosure.

FIG. 9 is a diagram illustrating an example of time axis resource assignment according to subcarrier spacing of a data channel and a control channel in a wireless communication system according to an embodiment of the disclosure.

FIG. 10 is a block diagram illustrating a wireless protocol structure of a base station and a terminal in a single cell, carrier aggregation, and dual connectivity situation in a wireless communication system according to an embodiment of the disclosure.

FIG. 11 is a diagram illustrating a TDD configuration and SBFD configuration according to an embodiment of the disclosure.

FIG. 12 is a diagram illustrating an SBFD configuration according to an embodiment of the disclosure.

FIG. 13 is a diagram illustrating an RBG constitution according to an embodiment of the disclosure.

FIG. 14 is a diagram illustrating a type-0 resource allocation scheduling method according to an embodiment of the disclosure.

FIG. 15 is a diagram illustrating an SBFD configuration according to an embodiment of the disclosure.

FIG. 16 is a diagram illustrating an SBFD configuration according to an embodiment of the disclosure.

FIG. 17 is a block diagram illustrating a structure of a terminal in a wireless communication system according to an embodiment of the disclosure.

FIG. 18 is a block diagram illustrating a structure of a base station in a wireless communication system according to an embodiment of the disclosure.

**[Mode for the Invention]**

Hereinafter, embodiments of the disclosure will be described in detail with reference to the attached drawings.

In describing embodiments, descriptions of technical contents that are well known in the technical field to which the disclosure pertains and that are not directly related to the disclosure will be omitted. This is to more clearly convey the gist of the disclosure without obscuring the gist of the disclosure by omitting unnecessary description.

For the same reason, some components are exaggerated, omitted, or schematically illustrated in the accompanying drawings. Further, the size of each component does not fully reflect the actual size. In each drawing, the same reference numerals are given to the same or corresponding components.

Advantages and features of the disclosure, and a method of achieving them will become apparent with reference to the embodiments described below in detail in conjunction with the accompanying drawings. However, the disclosure is not limited to the embodiments disclosed below, but may be implemented in various different forms, and only these embodiments enable the disclosure to be complete, and are provided to fully inform the scope of the disclosure to those of ordinary skill in the art to which the disclosure pertains, and the disclosure is only defined by the scope of the claims. Like reference numerals refer to like components throughout the specification. Further, in describing the disclosure, in the case that it is determined that a detailed description of a related function or constitution may unnecessarily obscure the gist of the disclosure, a detailed description thereof will be omitted. Terms described below are terms defined in consideration of functions in the disclosure, which may vary according to intentions or customs of users and providers. Therefore, the definition should be made based on the content throughout this specification.

Hereinafter, a base station is a subject performing resource allocation of a terminal, and may be at least one of a gNode B, an eNode B, a node B, a base station (BS), a radio access unit, a base station controller, or a node on a network. The terminal may include a user equipment (UE), a mobile station (MS), a cellular phone, a smart phone, a computer, or a multimedia system capable of performing a communication function. In the disclosure, a downlink (DL) is a wireless transmission path of a signal transmitted from a base station to a terminal, and an uplink (UL) is a wireless transmission path of a signal transmitted from a terminal to a base station. Hereinafter, although an LTE or LTE-A system may be described as an example, embodiments of the disclosure may be applied to other communication systems having a similar technical background or channel type. For example, 5G mobile communication technology (5G, new radio (NR)) developed after LTE-A may be included therein, and the following 5G may be a concept including existing LTE, LTE-A and other similar services. Further, the disclosure may be applied to other communication systems through some modifications within a range that does not significantly deviate from the scope of the disclosure by the determination of a person having skilled technical knowledge.

In this case, it will be understood that each block of message flow diagrams and combinations of the message flow diagrams may be performed by computer program instructions. Because these computer program instructions may be mounted in a processor of a general purpose computer, special purpose computer, or other programmable data processing equipment, the instructions performed by a processor of a computer or other programmable data processing equipment generate a means that performs functions described in the message flow diagram block(s). Because these computer program instructions may be stored in a computer usable or computer readable memory that may direct a computer or other programmable data processing equipment in order to implement a function in a particular manner, the instructions stored in the computer usable or computer readable memory may produce a production article containing instruction means for performing the function described in the message flow diagram block(s). Because the computer program instructions may be mounted on a computer or other programmable data processing equipment, a series of operation steps are performed on the computer or other programmable data processing equipment to generate a computer-executed process; thus, instructions for performing the computer or other programmable data processing equipment may provide steps for performing functions described in the message flow diagram block(s).

Further, each block may represent a portion of a module, a segment, or a code including one or more executable instructions for executing specified logical function(s). Further, it should be noted that in some alternative implementations, functions recited in the blocks may occur out of order. For example, two blocks illustrated one after another may in fact be performed substantially simultaneously, or the blocks may be sometimes performed in the reverse order according to the corresponding function.

In this case, the term '-unit' used in this embodiment means software or hardware components such as field programmable gate array (FPGA) or application specific integrated circuit (ASIC), and '- unit' performs certain roles. However, '-unit' is not limited to software or hardware. '-unit' may be constituted to reside in an addressable storage medium or may be constituted to reproduce one or more processors. Therefore, as an example, '-unit' includes components such as software components, object-oriented software components, class components, and task components, processes, functions, properties, procedures, subroutines, segments of program code, drivers, firmware, microcode, circuit, data, databases, data structures, tables, arrays, and variables. Functions provided in the components and '-units' may be combined into a smaller number of components and '-units' or may be further separated into additional components and '-units'. Further, components and '-units' may be implemented to reproduce one or more CPUs in a device or secure multimedia card. Further, in an embodiment, '-unit' may include one or more processors.

A wireless communication system is evolving from providing voice-oriented services in the early days to a broadband wireless communication system that provides high-speed and high-quality packet data services as in communication standards such as high speed packet access (HSPA), long term evolution (LTE) or evolved universal terrestrial radio access (E-UTRA), LTE-Advanced (LTE-A), and LTE-Pro of 3GPP, high rate packet data (HRPD) and ultra mobile broadband (UMB) of 3GPP2, and IEEE 802.16e.

An LTE system, which is a representative example of the broadband wireless communication system, employs an orthogonal frequency division multiplexing (OFDM) scheme in a downlink (DL) and a single carrier frequency division multiple access (SC-FDMA) scheme in an uplink. The uplink means a radio link in which a user equipment (UE) or a mobile station (MS) transmits data or control signals to an eNode B (eNB) or a base station (BS), and the downlink means a radio link in which a base station transmits data or control signals to a terminal. The above-described multiple access method enables data or control information of each user to distinguish by allocating and operating data or control information so that time-frequency resources to carry data or control information for each user in general do not overlap each other, that is, so that orthogonality is established.

A 5G communication system, which is a future communication system after LTE, should support services that simultaneously satisfy various requirements so that various requirements of users and service providers may be freely reflected. Services considered for the 5G communication system include enhanced mobile broadband (eMBB), massive machine type communication (mMTC), ultra reliability low latency communication (URLLC), and the like.

The eMBB aims to provide a more improved data rate than a data rate supported by existing LTE, LTE-A, or LTE-Pro. For example, in the 5G communication system, the eMBB should be able to provide a peak data rate of 20 Gbps in a downlink and a peak data rate of 10 Gbps in an uplink from the viewpoint of one base station. Further, the 5G communication system should provide an increased user perceived data rate of a terminal while providing a peak data rate. In order to satisfy such requirements, it is required to improve various transmission and reception technologies, including more advanced multi input and multi output (MIMO) transmission technology. Further, the LTE system transmits a signal using a transmission bandwidth of maximum 20 MHz in the 2 GHz band, whereas the 5G communication system can satisfy a data rate required by the same by using a frequency bandwidth wider than 20 MHz in a frequency band of 3 to 6 GHz or 6 GHz or more.

At the same time, in the 5G communication system, mMTC is being considered to support application services such as Internet of Thing (IoT). In order to efficiently provide IoT, mMTC requires access support for large-scale terminals within a cell, improvement of coverage of terminals, an improved battery time, and cost reduction of terminals. Because the IoT is attached to various sensors and various devices to provide communication functions, it should be able to support a large number of terminals (e.g., 1,000,000 terminals/km$^2$) within a cell. Further, because a terminal supporting mMTC is likely to be located in a shaded area that a cell cannot cover, such as the basement of a building, due to the nature of the service, the terminal may require wider coverage compared to other services provided by the 5G communication system. The terminal supporting mMTC should be composed of a low cost terminal, and because it is difficult to frequently exchange a battery of the terminal, a very long battery life time such as 10 to 15 years may be required.

Finally, URLLC is a cellular-based wireless communication service used for mission-critical. For example, a service used for remote control of a robot or machinery, industrial automation, unmanned aerial vehicle, remote health care, emergency alert, and the like may be considered. Therefore, communication provided by URLLC should provide very low latency and very high reliability. For example, a service supporting URLLC should satisfy air interface latency smaller than 0.5 milliseconds and simultaneously has the requirement of a packet error rate of 10-5 or less. Therefore, for a service supporting URLLC, the 5G system may require design requirements that should provide a transmit time interval (TTI) smaller than that of other services and that should simultaneously allocate a wide resource in a frequency band in order to secure reliability of a communication link.

Three services, i.e., eMBB, URLLC, and mMTC of 5G may be multiplexed and transmitted in a single system. In this case, in order to satisfy different requirements of each service, different transmission and reception techniques and transmission and reception parameters may be used between services. 5G is not limited to the above-described three services.

[NR Time-Frequency Resource]

Hereinafter, a frame structure of a 5G system will be described in more detail with reference to the drawings.

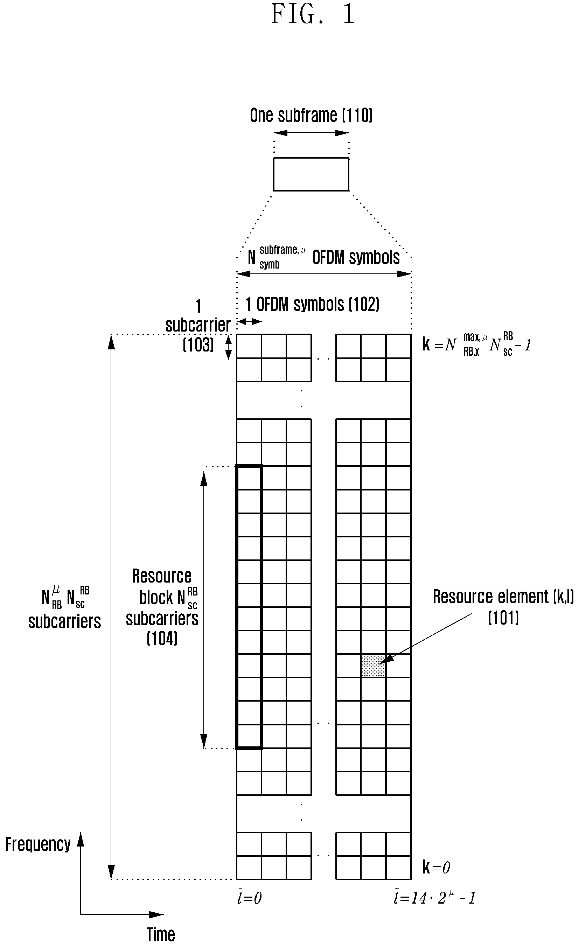

FIG. 1 is a diagram illustrating a basic structure of a time-frequency domain, which is a radio resource area in which data or control channels are transmitted in a 5G system.

A horizontal axis of FIG. 1 represents a time domain, and a vertical axis of FIG. 1 represents a frequency domain. A basic unit of resources in the time and frequency domains is a resource element (RE) 101 and may be defined to 1 orthogonal frequency division multiplexing (OFDM) symbol 102 on the time axis and 1 subcarrier 103 on the frequency axis. In the frequency domain, the $N_{SC}^{RB}$ (e.g., 12) number of consecutive REs may constitute one resource block (RB) 104.

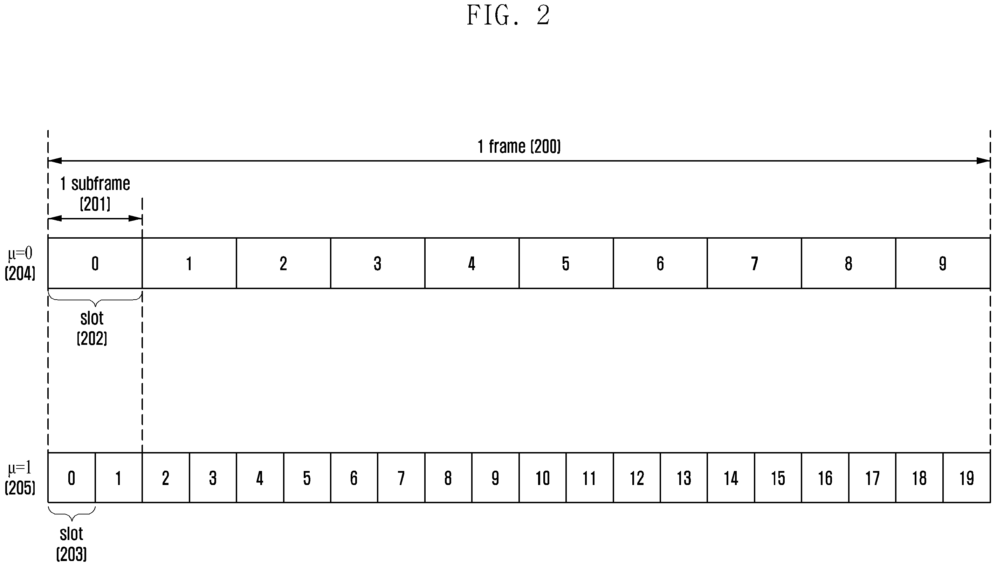

FIG. 2 is a diagram illustrating a frame, subframe, and slot structure in a wireless communication system according to an embodiment of the disclosure.

FIG. 2 illustrates an example of a structure of a frame 200, a subframe 201, and a slot 202. 1 frame 200 may be defined to 10 ms. 1 subframe 201 may be defined to 1 ms; thus, 1 frame 200 may be composed of total 10 subframes 201. 1 slots 202 and 203 may be defined to 14 OFDM symbols (i.e., the number $N_{symb}^{slot}$ of symbols per slot is 14). 1 subframe 201 may be composed of one or a plurality of slots 202 and 203, and the number of slots 202 and 203 per subframe 201 may vary according to configuration values $\mu$ 204 and 205 for subcarrier spacing. In an example of FIG. 2, the case that $\mu$ = 0, 204 and the case that $\mu$ = 1, 205 are illustrated as the subcarrier spacing configuration value. In the case that $\mu$ = 0, 204, 1 subframe 201 may be composed of 1 slot 202, and in the case that $\mu$ = 1, 205, 1 subframe 201 may be composed of 2 slots 203. That is, the number $N_{slot}^{subframe,\mu}$ of slots per subframe may vary according to the configuration value $\mu$ for the subcarrier spacing; thus, the number $N_{slot}^{frame,\mu}$ of slots per frame may vary. $N_{slot}^{subframe,\mu}$ and $N_{slot}^{frame,\mu}$ according to each subcarrier spacing configuration $\mu$ may be defined as in Table 1.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Bandwidth Part (BWP)]

Hereinafter, a bandwidth part (BWP) configuration in a 5G communication system may be applied will be described in detail with reference to the drawings.

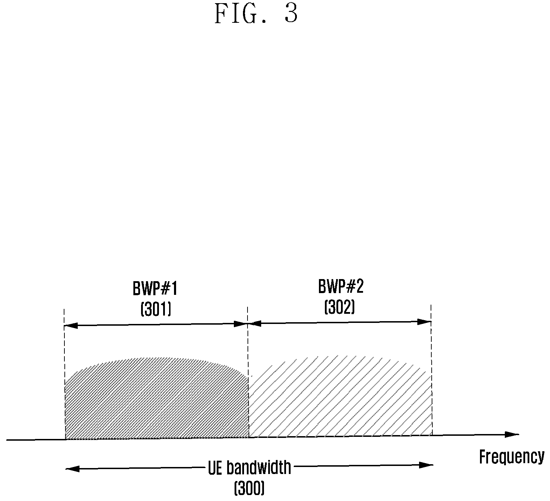

FIG. 3 is a diagram illustrating an example of a BWP configuration in a wireless communication system according to an embodiment of the disclosure.

FIG. 3 illustrates an example in which a UE bandwidth 300 is configured to two BWPs, that is, a BWP#1, 301 and a BWP#2, 302. The base station may configure one or a plurality of BWPs to the UE and configure information such as Table 2 for each BWP.

[Table 2]

```
BWP ::=                              SEQUENCE {
bwp-Id                                    BWP-Id,
(bandwidth part identifier)
locationAndBandwidth         INTEGER (1..65536),
(bandwidth part location)
subcarrierSpacing                 ENUMERATED  {n0,  n1,  n2,  n3,  n4,
n5},
(subcarrier spacing)
cyclicPrefix                          ENUMERATED { extended }


(cyclic prefix)
}
```

The disclosure is not limited to the above example, and various parameters related to the BWP may be configured to the UE in addition to the configuration information. The information may be transmitted by the base station to the UE through higher layer signaling, for example, RRC signaling. At least one BWP among one or a plurality of configured BWPs may be activated. Whether the configured BWP is activated may be quasi-statically transmitted from the base station to the UE through RRC signaling or may be dynamically transmitted from the base station to the UE through downlink control information (DCI).

According to some embodiments, the UE before RRC connection may receive a configuration of an initial BWP for initial access from the base station through a master information block (MIB). More specifically, in an initial access step, the UE may receive configuration information on a search space and a control resource set (CORESET) in which a PDCCH for receiving system information (may correspond to remaining system information (RMSI) or system information block 1 (SIB1)) necessary for initial access may be transmitted through the MIB. The CORESET and search space configured by the MIB may be regarded as an identity (ID) 0, respectively. The base station may notify the UE of configuration information such as frequency allocation information, time allocation information, and numerology for the CORESET #0 through the MIB. Further, the base station may notify the UE of configuration information on a monitoring period and occasion for the CORESET #0, that is, configuration information on a search space #0 through the MIB. The UE may regard a frequency domain configured to the CORESET #0 acquired from the MIB as an initial BWP for initial access. In this case, an identity (ID) of the initial BWP may be regarded as 0.

The configuration for the BWP supported in the 5G may be used for various purposes.

According to some embodiments, in the case that a bandwidth supported by the UE is smaller than the system bandwidth, this may be supported through the BWP configuration. For example, as the base station configures a frequency position (configuration information 2) of the BWP to the UE, the UE may transmit and receive data at a specific frequency position within the system bandwidth.

Further, according to some embodiments, for the purpose of supporting different numerologies, the base station may configure a plurality of BWPs to the UE. For example, in order to support both data transmission and reception using subcarrier spacing of 15 kHz and subcarrier spacing of 30 kHz to a certain UE, the base station may configure two BWPs to subcarrier spacings of 15 kHz and 30 kHz, respectively. Different BWPs may be frequency division multiplexed, and in the case that data is to be transmitted and received at specific subcarrier spacing, a BWP configured at corresponding subcarrier spacing may be activated.

Further, according to some embodiments, for the purpose of reducing power consumption of the UE, the base station may configure BWPs having different sizes of bandwidth to the UE. For example, in the case that the UE supports a very large bandwidth, for example, a bandwidth of 100 MHz and always transmits and receives data with the corresponding bandwidth, very large power consumption may occur. In particular, monitoring an unnecessary downlink control channel with a large bandwidth of 100 MHz in a situation in which there is no traffic may be very inefficient in terms of power consumption. For the purpose of reducing power consumption of the UE, the base station may configure a BWP of a relatively small bandwidth, for example, a BWP of 20 MHz to the UE. In a situation in which there is no traffic, the UE may perform a monitoring operation in the BWP of 20 MHz, and in the case that data is generated, the UE may transmit and receive data with the BWP of 100 MHz according to the instruction of the base station.

In a method of configuring the BWP, UEs before RRC connection may receive configuration information on the initial BWP through an MIB in an initial access step. More specifically, the UE may receive a configuration of a control resource set (CORESET) for a downlink control channel in which DCI scheduling the system information block (SIB) may be transmitted from the MIB of a physical broadcast channel (PBCH). A bandwidth of the CORESET configured by the MIB may be regarded as an initial BWP, and the UE may receive a physical downlink shared channel (PDSCH) in which the SIB is transmitted through the configured initial BWP. The initial BWP may be used for other system information (OSI), paging, and random access in addition to the use of receiving the SIB.

[Bandwidth Part (BWP) Change]

In the case that one or more BWPs are configured to the UE, the base station may instruct the UE to change (or switch, transition) the BWP using a BWP indicator field in the DCI. For example, in FIG. 3, in the case that the currently activated BWP of the UE is a BWP #1, 301, the base station may indicate a BWP #2, 302 by a BWP indicator in the DCI to the UE, and the UE may perform the BWP change with the BWP #2, 302 indicated by the BWP indicator in the received DCI.

As described above, because the DCI-based BWP change may be instructed by DCI scheduling the PDSCH or PUSCH, in the case that the UE receives a BWP change request, the UE should be able to receive or transmit the PDSCH or PUSCH scheduled by the corresponding DCI in the changed BWP without difficulty. To this end, the standard stipulates requirements for a delay time TBWP required when changing the BWP, and may be defined as in Table 3, for example.

[Table 3]

| $\mu$ | NR Slot length (ms) | BWP switch delay $T_{BWP}$ (slots) | |
| --- | --- | --- | --- |
| | | Type 1[Note 1] | Type 2[Note 1] |
| 0 | 1 | 1 | 3 |

(continued)

| $\mu$ | NR Slot length (ms) | BWP switch delay $T_{BWP}$ (slots) | |
| --- | --- | --- | --- |
| | | Type 1[Note 1] | Type 2[Note 1] |
| 1 | 0.5 | 2 | 5 |
| 2 | 0.25 | 3 | 9 |
| 3 | 0.125 | 6 | 18 |
| Note 1: Depends on UE capability. Note 2: If the BWP switch involves changing of SCS, the BWP switch delay is determined by the larger one between the SCS before BWP switch and the SCS after BWP switch. | | | |

The requirement for a BWP change delay time supports type 1 or type 2 according to a capability of the UE. The UE may report a supportable BWP delay time type to the base station.

According to the above-described requirement for the BWP change delay time, in the case that the UE receives DCI including the BWP change indicator in a slot n, the UE may complete the change to a new BWP indicated by the BWP change indicator at a time point not later than a slot $n+T_{BWP}$ and perform transmission and reception for a data channel scheduled by the corresponding DCI in the changed new BWP. In the case that the base station wants to schedule a data channel with a new BWP, the base station may determine time domain resource assignment for the data channel in consideration of the BWP change delay time $T_{BWP}$ of the UE. That is, when scheduling a data channel with a new BWP, in a method of determining time domain resource assignment for the data channel, the base station may schedule the corresponding data channel after the BWP change delay time. Accordingly, the UE may not expect that the DCI indicating the BWP change indicates a slot offset value (K0 or K2) smaller than the BWP change delay time $T_{BWP}$.

When the UE receives DCI (e.g., DCI format 1_1 or 0_1) indicating a BWP change, the UE may not perform any transmission or reception during a corresponding time interval from a third symbol of a slot that receives a PDCCH including the corresponding DCI to a start point of a slot indicated by a slot offset value (K0 or K2) indicated by a time domain resource assignment indicator field in the corresponding DCI. For example, when the UE received DCI indicating a BWP change in a slot n, and a slot offset value indicated by the corresponding DCI is K, the UE may not perform any transmission or reception from a third symbol of the slot n to the previous symbol of a slot n+K (i.e., a last symbol of a slot n+K-1).

[SS/PBCH Block]

Hereinafter, a synchronization signal (SS)/PBCH block in 5G will be described.

The SS/PBCH block may mean a physical layer channel block composed of a primary SS (PSS), a secondary SS (SSS), and a PBCH. Specifically, it is as follows.

-    PSS: The PSS is a reference signal for downlink time/frequency synchronization, and provides some information of a cell ID.
-    SSS: The SSS is a reference for downlink time/frequency synchronization, and provides remaining cell ID information that is not provided by the PSS. Additionally, the SSS may serve as a reference signal for demodulation of the PBCH.
-    PBCH: The PBCH provides essential system information required for transmission and reception of data channels and control channels of the UE. Essential system information may include search space related control information indicating radio resource mapping information of a control channel, scheduling control information on a separate data channel that transmits system information, and the like.
-    SS/PBCH block: The SS/PBCH block is composed of a combination of the PSS, SSS, and PBCH. One or a plurality of SS/PBCH blocks may be transmitted within 5 ms, and each transmitted SS/PBCH block may be distinguished by an index.

The UE may detect the PSS and SSS in an initial access step and decode the PBCH. The UE may acquire an MIB from the PBCH, and receive a configuration of a control resource set (CORESET) #0 (which may correspond to a CORESET having a CORESET index of 0) therefrom. The UE may assume that the selected SS/PBCH block and demodulation reference signal (DMRS) transmitted in the CORESET #0 are quasi co-located (QCL) and perform monitoring for the CORESET #0. The UE may receive system information with downlink control information transmitted in the CORESET #0. The UE may acquire random access channel (RACH) related configuration information required for initial access from the received system information. The UE may transmit a physical RACH (PRACH) to the base station in consideration of the selected SS/PBCH index, and the base station that has received the PRACH may acquire information on the SS/PBCH block index selected by the UE. The base station may know that the UE has selected a certain block among SS/PBCH blocks and monitors the CORESET #0 related thereto.

[PDCCH: related to DCI]

Hereinafter, downlink control information (DCI) in a 5G system will be described in detail.

Scheduling information on uplink data (or physical uplink shared channel (PUSCH)) or downlink data (or physical downlink shared channel (PDSCH)) in the 5G system is transmitted from the base station to the UE through DCI. The UE may monitor a DCI format for fallback and a DCI format for non-fallback with respect to the PUSCH or PDSCH. The DCI format for fallback may be composed of a fixed field predefined between the base station and the UE, and the DCI format for non-fallback may include a configurable field.

The DCI may be transmitted through a physical downlink control channel (PDCCH) via channel coding and modulation processes. A cyclic redundancy check (CRC) is attached to a DCI message payload, and the CRC may be scrambled with a radio network temporary identifier (RNTI) corresponding to the identity of the UE. Different RNTIs may be used according to the purpose of the DCI message, for example, UE-specific data transmission, power control command, or random access response. That is, the RNTI is not explicitly transmitted but is included in a CRC calculation process and transmitted. Upon receiving the DCI message transmitted on the PDCCH, the UE may identify the CRC using the allocated RNTI, and when the CRC identification result is correct, the UE may know that the corresponding message has been transmitted to the UE.

For example, DCI scheduling a PDSCH for system information (SI) may be scrambled with an SI-RNTI. DCI scheduling a PDSCH for a random access response (RAR) message may be scrambled with an RA-RNTI. DCI scheduling a PDSCH for a paging message may be scrambled with a P-RNTI. DCI notifying a slot format indicator (SFI) may be scrambled with an SFI-RNTI. DCI notifying transmit power control (TPC) may be scrambled with a TPC-RNTI. DCI scheduling a UE-specific PDSCH or PUSCH may be scrambled with a cell RNTI (C-RNTI).

A DCI format 0_0 may be used as fallback DCI scheduling a PUSCH, and in this case, a CRC may be scrambled with a C-RNTI. The DCI format 0_0 in which a CRC is scrambled with a C-RNTI may include, for example, information of Table 4.

[Table 4]

- Identifier for DCI formats - [1] bit

- Frequency domain resource assignment- $[\lceil \log_2(N_{RB}^{UL,BWP}(N_{RB}^{UL,BWP}+1)/2)\rceil]$ bits

- Time domain resource assignment - X bits
- Frequency hopping flag - 1 bit.
- Modulation and coding scheme - 5 bits
- New data indicator - 1 bit
- Redundancy version - 2 bits
- HARQ process number - 4 bits
- TPC command for scheduled PUSCH - [2] bits
- UL/SUL (supplementary UL) indicator - 0 or 1 bit

A DCI format 0_1 may be used as non-fallback DCI scheduling a PUSCH, and in this case, a CRC may be scrambled with a C-RNTI. The DCI format 0_1 in which a CRC is scrambled with a C-RNTI may include, for example, information of Table 5.

[Table 5]

- Carrier indicator - 0 or 3 bits
- UL/SUL indicator - 0 or 1 bit
- Identifier for DCI formats - [1] bits
- Bandwidth part indicator - 0, 1 or 2 bits
- Frequency domain resource assignment

• For resource allocation type 0, $\lceil N_{RB}^{UL,BWP}/P\rceil$ bits

(continued)

- For resource allocation type 1, $\left\lceil \log_2(N_{RB}^{UL,BWP}(N_{RB}^{UL,BWP}+1)/2) \right\rceil$ bits

- Time domain resource assignment -1, 2, 3, or 4 bits

- VRB (virtual resource block)-to-PRB (physical resource block) mapping - 0 or 1 bit, only for resource allocation type 1.

• 0 bit if only resource allocation type 0 is configured;

• 1 bit otherwise.

- Frequency hopping flag - 0 or 1 bit, only for resource allocation type 1.

• 0 bit if only resource allocation type 0 is configured;

• 1 bit otherwise.

- Modulation and coding scheme - 5 bits

- New data indicator - 1 bit

- Redundancy version - 2 bits

- HARQ process number - 4 bits

- 1st downlink assignment index- 1 or 2 bits

• 1 bit for semi-static HARQ-ACK codebook;

• 2 bits for dynamic HARQ-ACK codebook with single HARQ-ACK codebook.

- 2nd downlink assignment index - 0 or 2 bits

• 2 bits for dynamic HARQ-ACK codebook with two HARQ-ACK sub-codebooks;

• 0 bit otherwise.

- TPC command for scheduled PUSCH - 2 bits

- SRS resource indicator - $\left\lceil \log_2\left( \sum_{k=1}^{L_{max}} \binom{N_{SRS}}{k} \right) \right\rceil$ or $\left\lceil \log_2(N_{SRS}) \right\rceil$ bits

• $\left\lceil \log_2\left( \sum_{k=1}^{L_{max}} \binom{N_{SRS}}{k} \right) \right\rceil$ bits for non-codebook based PUSCH transmission;

• $\left\lceil \log_2(N_{SRS}) \right\rceil$ bits for codebook based PUSCH transmission.

- Precoding information and number of layers -up to 6 bits

- Antenna ports- up to 5 bits

- SRS request - 2 bits

- CSI request - 0, 1, 2, 3, 4, 5, or 6 bits

- CBG (code block group) transmission information - 0, 2, 4, 6, or 8 bits

- PTRS-DMRS association - 0 or 2 bits.

- beta_offset indicator - 0 or 2 bits

- DMRS sequence initialization - 0 or 1 bit

A DCI format 1_0 may be used as fallback DCI scheduling a PDSCH, and in this case, a CRC may be scrambled with a C-RNTI. The DCI format 1_0 in which a CRC is scrambled with a C-RNTI may include, for example, information of Table 6.

[Table 6]

- Identifier for DCI formats - [1] bit

- Frequency domain resource assignment - $\left\lceil \left\lceil log_2(N_{RB}^{DL,BWP}(N_{RB}^{DL,BWP}+1)/2) \right\rceil \right\rceil$ bits

- Time domain resource assignment - X bits

- VRB-to-PRB mapping - 1 bit.

- Modulation and coding scheme - 5 bits

- New data indicator - 1 bit

(continued)

- Redundancy version - 2 bits
- HARQ process number - 4 bits
- Downlink assignment index - 2 bits
- TPC command for scheduled PUCCH - [2] bits
- PUCCH (physical uplink control channel) resource indicator - 3 bits
- PDSCH-to-HARQ feedback timing indicator - [3] bits

A DCI format 1_1 may be used as non-fallback DCI scheduling a PDSCH, and in this case, a CRC may be scrambled with a C-RNTI. The DCI format 1_1 in which a CRC is scrambled with a C-RNTI may include, for example, information of Table 7.

[Table 7]

- Carrier indicator - 0 or 3 bits
- Identifier for DCI formats - [1] bits
- Bandwidth part indicator - 0, 1 or 2 bits
- Frequency domain resource assignment

• For resource allocation type 0, $\left\lceil N_{\mathrm{RB}}^{\mathrm{DL,BWP}} / P \right\rceil$ bits

• For resource allocation type 1, $\left\lceil \log_2 (N_{\mathrm{RB}}^{\mathrm{DL,BWP}} (N_{\mathrm{RB}}^{\mathrm{DL,BWP}} + 1) / 2) \right\rceil$ bits
- Time domain resource assignment -1, 2, 3, or 4 bits
- VRB-to-PRB mapping - 0 or 1 bit, only for resource allocation type 1.
• 0 bit if only resource allocation type 0 is configured;
• 1 bit otherwise.
- PRB bundling size indicator - 0 or 1 bit
- Rate matching indicator - 0, 1, or 2 bits
- ZP CSI-RS trigger - 0, 1, or 2 bits
For transport block 1:
- Modulation and coding scheme - 5 bits
- New data indicator - 1 bit
- Redundancy version - 2 bits
For transport block 2:
- Modulation and coding scheme - 5 bits
- New data indicator - 1 bit
- Redundancy version - 2 bits
- HARQ process number - 4 bits
- Downlink assignment index - 0 or 2 or 4 bits
- TPC command for scheduled PUCCH - 2 bits
- PUCCH resource indicator - 3 bits
- PDSCH-to-HARQ_feedback timing indicator - 3 bits
- Antenna ports - 4, 5 or 6 bits
- Transmission configuration indication - 0 or 3 bits
- SRS request - 2 bits
- CBG transmission information - 0, 2, 4, 6, or 8 bits
- CBG flushing out information - 0 or 1 bit
- DMRS sequence initialization - 1 bit

[PDCCH: CORESET, REG, CCE, Search Space]

Hereinafter, a downlink control channel in a 5G communication system will be described in more detail with reference to the drawings.

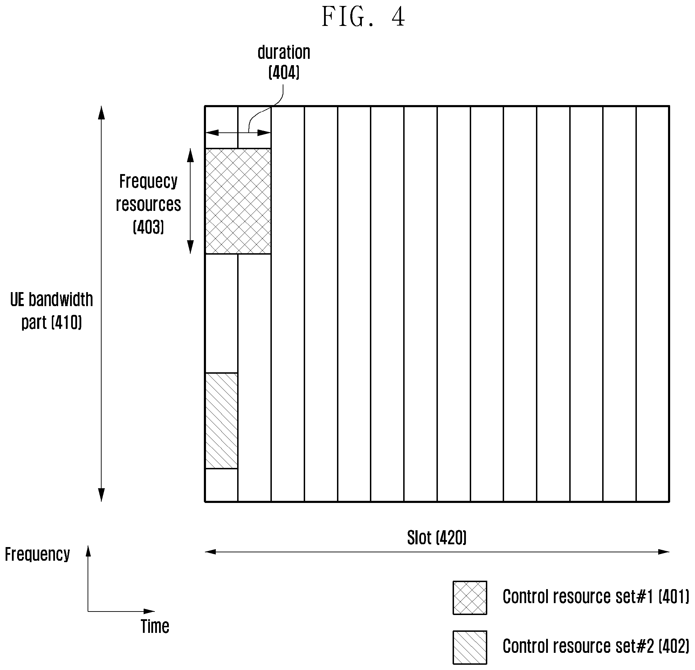

FIG. 4 is a diagram illustrating an example of a control resource set (CORESET) in which a downlink control channel is transmitted in a 5G wireless communication system. FIG. 4 illustrates an example in which a UE BWP 410 is configured on the frequency axis and in which two CORESETs (CORESET # 1, 401 and CORESET # 2, 402) are configured within 1 slot 420 on the time axis. The CORESETs 401 and 402 may be configured to a specific frequency resource 403 within the entire UE BWP 410 on the frequency axis. One or a plurality of OFDM symbols may be configured to the time axis, and this may be defined to a control resource set duration 404. With reference to the illustrated example of FIG. 4, the CORESET #1, 401 is configured to a control resource set duration of 2 symbols, and the CORESET #2, 402 is configured to a control resource set duration of 1 symbol.

The CORESET in 5G described above may be configured by the base station to the UE through higher layer signaling (e.g., system information, master information block (MIB), radio resource control (RRC) signaling). Configuring the CORESET to the UE means providing information such as a CORESET identity, a frequency location of the CORESET, and a symbol length of the CORESET. For example, it may include information of Table 8.

[Table 8]

| | |
|---|---|
| ControlResourceSet ::= | SEQUENCE { |
| Corresponds to L1 parameter 'CORESET-ID' | |
| controlResourceSetId | |
| ControlResourceSetId, | |
| (control area identity) | |
| frequencyDomainResources | BIT STRING (SIZE (45)), |
| (frequency axis resource assignment information) | |
| duration | INTEGER |
| (1..maxCoReSetDuration), | |
| (time axis resource assignment information) | |
| cce-REG-MappingType | |
| CHOICE { | |
| (CCE-to-REG mapping method) | |
| interleaved | |
| SEQUENCE { | |

```
reg-BundleSize
        ENUMERATED {n2, n3, n6},
(REG bundle size)
precoderGranularity
        ENUMERATED {sameAsREG-bundle, allContiguousRBs},
interleaverSize
        ENUMERATED {n2, n3, n6}
(interleaver size)
shiftIndex
        INTEGER(0..maxNrofPhysicalResourceBlocks-1)
OPTIONAL
(interleaver shift)
},
nonInterleaved                                              NULL
},
tci-StatesPDCCH                         SEQUENCE(SIZE
(1..maxNrofTCI-StatesPDCCH)) OF TCI-StateId
        OPTIONAL,
(QCL configuration information)
tci-PresentInDCI                              ENUMERATED
{enabled}
OPTIONAL,      -- Need S
}
```

In Table 8, tci-StatesPDCCH (simply referred to as a transmission configuration indication (TCI) state) configuration information may include one or a plurality of synchronization signal (SS)/physical broadcast channel (PBCH) block index or channel state information reference signal (CSI-RS) index information in a quasi co located(QCL) relationship with a DMRS transmitted in the corresponding CORESET.

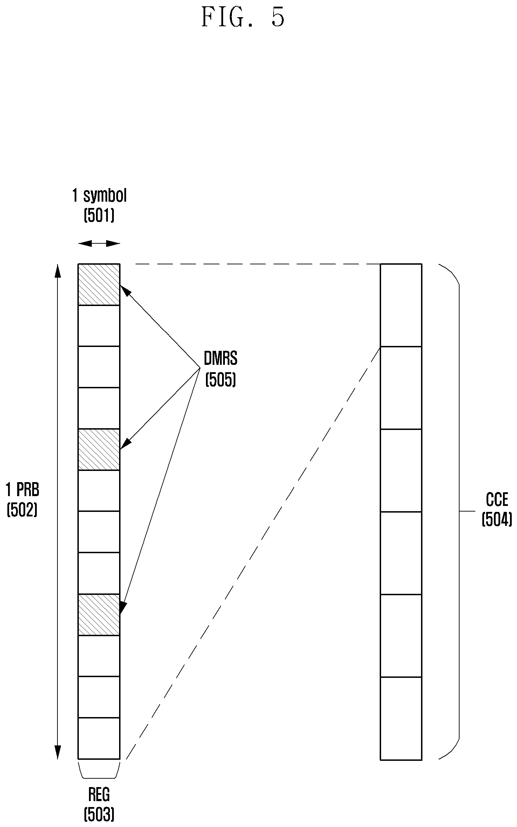

FIG. 5 is a diagram illustrating an example of basic units of time and frequency resources constituting a downlink control channel that may be used in 5G. With reference to FIG. 5, a basic unit of time and frequency resources constituting a control channel may be referred to as a resource element group (REG) 503, and the REG 503 may be defined to 1 OFDM symbol 501 in the time axis and 1 physical resource block (PRB) 502 in the frequency axis, that is, 12 subcarriers. The base station may concatenate the REG 503 to constitute a downlink control channel allocation unit.

As illustrated in FIG. 5, in the case that a basic unit to which a downlink control channel is allocated in 5G is a control channel element (CCE) 504, 1 CCE 504 may be composed of a plurality of REGs 503. When the REG 503 illustrated in FIG. 5 is described as an example, the REG 503 may be composed of 12 REs, and when 1 CCE 504 is composed of 6 REGs 503, 1 CCE 504 may be composed of 72 REs. When a downlink CORESET is configured, the corresponding CORESET may be composed of a plurality of CCEs 504, and a specific downlink control channel may be mapped and transmitted to one or a plurality of CCEs 504 according to an aggregation level (AL) in the CORESET. The CCEs 504 in the CORESET are identified by numbers, and in this case, the numbers of the CCEs 504 may be assigned according to a logical mapping method.

The basic unit of the downlink control channel illustrated in FIG. 5, that is, the REG 503 may include both REs to which DCI is mapped and an area to which a DMRS 505, which is a reference signal for decoding them, is mapped. As illustrated in FIG. 5, three DMRSs 505 may be transmitted within one REG 503. The number of CCEs required to transmit the PDCCH may be 1, 2, 4, 8, or 16 according to an aggregation level (AL), and the numbers of different CCEs may be used for implementing link adaptation of the downlink control channel. For example, in the case that AL=L, one downlink control channel may be transmitted through the L number of CCEs. The UE should detect a signal without knowing information on a downlink control channel, and a search space representing a set of CCEs is defined for blind decoding. The search space is a set of downlink control channel candidates consisting of CCEs in which the UE should attempt to decode on a given aggregation level, and because there are various aggregations levels that make one group with 1, 2, 4, 8, and 16 CCEs, the UE may have a plurality of search spaces. A search space set may be defined as a set of search spaces in all configured aggregation levels.

The search space may be classified into a common search space and a UE-specific search space. In order to receive cell common control information such as dynamic scheduling for system information or paging messages, a certain group of UEs or all UEs may search for the common search space of the PDCCH. For example, PDSCH scheduling allocation information for transmission of an SIB including cell operator information may be received by searching for the common search space of the PDCCH. In the case of a common search space, because a certain group of UEs or all UEs should receive the PDCCH, the common search space may be defined as a set of pre-promised CCEs. Scheduling allocation information on the UE-specific PDSCH or PUSCH may be received by searching for a UE-specific search space of the PDCCH. The UE-specific search space may be defined UE-specifically as a function of various system parameters and the identity of the UE.

In 5G, a parameter for a search space for a PDCCH may be configured from the base station to the UE through higher layer signaling (e.g., SIB, MIB, RRC signaling). For example, the base station may configure the number of PDCCH candidates at each aggregation level L, a monitoring period for the search space, a monitoring occasion in symbol units within a slot for the search space, a search space type (common search space or UE-specific search space), a combination of a DCI format and a radio network temporary identifier (RNTI) to be monitored in the corresponding search space, and a CORESET index to monitor a search space to the UE. For example, the parameter for the search space for the PDCCH may include information of Table 9.

[Table 9]

```
SearchSpace ::=                                              SEQUENCE {
Identity of the search space. SearchSpaceId = 0 identifies the SearchSpace configured
via PBCH (MIB) or ServingCellConfigCommon.
searchSpaceId
        SearchSpaceId,
(search space identifier)
controlResourceSetId
        ControlResourceSetId,
(control area identifier)
monitoringSlotPeriodicityAndOffset                CHOICE {
(monitoring slot level period)
sl1
        NULL,
sl2
        INTEGER (0..1),
sl4
        INTEGER (0..3),
sl5
        INTEGER (0..4),
sl8
        INTEGER (0..7),
sl10
        INTEGER (0..9),
sl16
        INTEGER (0..15),
sl20
```

```
                INTEGER (0..19)
}
OPTIONAL,
duration(monitoring length)               INTEGER (2..2559)
monitoringSymbolsWithinSlot                              BIT
STRING (SIZE (14))
OPTIONAL,
(monitoring symbol within slot)
nrofCandidates
        SEQUENCE {
(number of PDCCH candidates for each aggregation level)
aggregationLevel1
        ENUMERATED {n0, n1, n2, n3, n4, n5, n6, n8},
aggregationLevel2
        ENUMERATED {n0, n1, n2, n3, n4, n5, n6, n8},
aggregationLevel4
        ENUMERATED {n0, n1, n2, n3, n4, n5, n6, n8},
aggregationLevel8
        ENUMERATED {n0, n1, n2, n3, n4, n5, n6, n8},
aggregationLevel16                              ENUMERATED
{n0, n1, n2, n3, n4, n5, n6, n8}
},


searchSpaceType                                 CHOICE {
(search space type)
Configures this search space as common search space (CSS) and DCI formats to
monitor.
common
        SEQUENCE {
(common search space)
}
ue-Specific
        SEQUENCE {
(UE-specific search space)
Indicates whether the UE monitors in this USS for DCI formats 0-0 and 1-0 or for
```

```
formats 0-1 and 1-1.

formats

          ENUMERATED {formats0-0-And-1-0, formats0-1-And-1-1},

...

}
```

According to configuration information, the base station may configure one or a plurality of search space sets to the UE. According to some embodiments, the base station may configure a search space set 1 and a search space set 2 to the UE, configure to monitor a DCI format A scrambled with an X-RNTI in the common search space in the search space set 1, and configure to monitor a DCI format B scrambled with a Y-RNTI in the UE-specific search space in the search space set 2.

According to configuration information, one or a plurality of search space sets may exist in a common search space or a UE-specific search space. For example, a search space set #1 and a search space set #2 may be configured to common search spaces, and a search space set #3 and a search space set #4 may be configured to UE-specific search spaces.

In the common search space, a combination of the following DCI format and RNTI may be monitored. The disclosure is not limited to the following examples.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

In the UE-specific search space, a combination of the following DCI format and RNTI may be monitored. The disclosure is not limited to the following examples.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The specified RNTIs may follow the following definitions and uses.

C-RNTI (Cell RNTI): Used for scheduling a UE-specific PDSCH
TC-RNTI (Temporary Cell RNTI): Used for scheduling a UE-specific PDSCH
CS-RNTI (Configured Scheduling RNTI): Used for scheduling a quasi-statically configured UE-specific PDSCH
RA-RNTI (Random Access RNTI): Used for scheduling a PDSCH in a random access step
P-RNTI (Paging RNTI): Used for scheduling a PDSCH in which paging is transmitted
SI-RNTI (System Information RNTI): Used for scheduling a PDSCH through which system information is transmitted
INT-RNTI (Interruption RNTI): Used for notifying whether puncturing for a PDSCH
TPC-PUSCH-RNTI (Transmit Power Control for PUSCH RNTI): Used for indicating a power control command for a PUSCH
TPC-PUCCH-RNTI (Transmit Power Control for PUCCH RNTI): Used for indicating a power control command for a PUCCH
TPC-SRS-RNTI (Transmit Power Control for SRS RNTI): Used for indicating a power control command for an SRS

The above-described specified DCI formats may follow the definition of an example of Table 10.

[Table 10]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |

(continued)

| DCI format | Usage |
|---|---|
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In 5G, a search space of an aggregation level L in a CORESET p and a search space set s may be expressed as in Equation 1.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) \bmod \left\lfloor \frac{N_{CCE,p}}{L} \right\rfloor \right\} + i$$

- $L$: aggregation level
- $n_{CI}$: carrier index
- $N_{CCE,p}$: the number of total CCEs existing in a control area p
- $n_{s,f}^{\mu}$ : slot index
- $M_{s,max}^{(L)}$ : the number of PDCCH candidates of the aggregation level L
- $m_{s,n_{CI}} = 0, \ldots, M_{s,max}^{(L)} -1$ : PDCCH candidate index of the aggregation level L
- $i = 0, ..., L$ -1
- $Y_{p,n_{s,f}^{\mu}} = \left( A_p \cdot Y_{p,n_{s,f}^{\mu}-1} \right) \bmod D$ , $Y_{p,-1} = n_{RNTI} \neq 0$, $A_p$ = 39827 for *pmod*3 = 0, $A_p$ = 39829 *for pmod*3 = 1, $A_p$ = 39839 *for pmod*3 = 2, *D* = 65537
- $n_{RNTI}$: UE identifier

The $Y_{p,n_{s,f}^{\mu}}$ value may correspond to 0 in the case of a common search space.

In the case of a UE-specific search space, the $Y_{p,n_{s,f}^{\mu}}$ value may correspond to a value that changes according to an identity of the UE (C-RNTI or an ID configured to the UE by the base station) and a time index.

In 5G, as a plurality of search space sets may be configured with different parameters (e.g., parameters in Table 9), a set of search space sets monitored by the UE at each time point may be changed. For example, in the case that a search space set #1 is configured to an X-slot period and that a search space set #2 is configured to a Y-slot period and that X and Y are different, the UE may monitor both the search space set #1 and the search space set #2 in a specific slot and monitor one of the search space set #1 and the search space set #2 in a specific slot.

[PDSCH/PUSCH: related to frequency resource allocation]

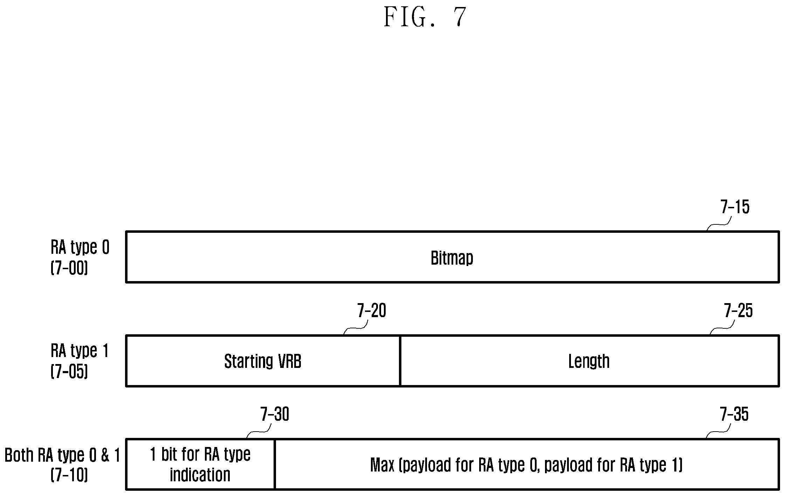

FIG. 7 is a diagram illustrating an example of frequency axis resource assignment of a physical downlink shared channel (PDSCH) or a physical uplink shared channel (PUSCH) in a wireless communication system according to an embodiment of the disclosure.

FIG. 7 is a diagram illustrating three frequency axis resource assignment methods of type-0 (7-00), type-1 (7-05), and dynamic switch (7-10) that may be configured through an upper layer in an NR wireless communication system.

With reference to FIG. 7, in the case that the UE is configured to use only type-0 resource allocation through upper layer signaling (7-00), some downlink control information (DCI) that allocates a PDSCH/PUSCH to the UE includes a bitmap composed of the NRBG number of bits. In this case, NRBG means the number of a resource block group (RBG) determined as illustrated in [Table 11] according to a BWP size allocated by a BWP indicator and an upper layer parameter rbg-Size, and data is transmitted to the RBG indicated as 1 by the bitmap.

[Table 11]

| Bandwidth Part Size | Configuration 1 | Configuration 2 |
|---|---|---|
| 1 - 36 | 2 | 4 |
| 37 - 72 | 4 | 8 |
| 73 - 144 | 8 | 16 |
| 145 - 275 | 16 | 16 |

The size of a BWP is the number of RBs included in the BWP. More specifically, in the case that type-0 resource allocation is instructed, a length of a frequency domain resource assignment (FDRA) field of DCI received by the UE is equal to the number $N_{RBG}$ of RBGs and

$$N_{RBG} = \left\lceil (N_{BWP}^{size} + (N_{BWP}^{start} \bmod P))/P \right\rceil$$

. Here, a first RBG includes

$$RBG_0^{size} = P - N_{BWP}^{size} \bmod P$$

number of RBs, if $\left( N_{BWP}^{start} + N_{BWP}^{size} \right) \bmod P > 0$, a last RBG includes

$$RBG_{last}^{size} = \left( N_{BWP}^{start} + N_{BWP}^{size} \right) \bmod P$$

number of RBs, and otherwise, a last RBG includes $RBG_{last}^{size} = P$ number of RBs. The remaining RBGs include P number of RBs. Here, P is the number of nominal RBGs determined according to Table 11.

In the case that the UE is configured to use only type-1 resource allocation through higher layer signaling (7-05), DCI that allocates a PDSCH/PUSCH to the UE include frequency domain resource assignment (FDRA) information composed of the

$$\left\lceil \log_2 (N_{RB}^{DL,BWP} (N_{RB}^{DL,BWP} +1)/2 ) \right\rceil$$

number of bits. Here, $N_{RB}^{BWP}$ is the number of RBs included in the BWP. Thereby, the base station may configure a starting VRB 7-20 and a length 7-25 of frequency axis resources continuously allocated therefrom.

In the case that the UE is configured to use both type-0 resource allocation and type-1 resource allocation through upper layer signaling (7-10), some DCI that allocates a PDSCH/PUSCH to the UE include frequency axis resource assignment information composed of bits of a payload 7-15 for configuring type-0 resource allocation and a larger value 7-25 of payloads 7-20 and 7-25 for configuring type-1 resource allocation. Conditions for this will be described later. In this case, one bit may be added to a most significant bit (MSB) of frequency axis resource assignment information in the DCI, and in the case that the bit has a value of '0', it may be indicated that type-0 resource allocation is used, and in the case that the bit has a value of '1', it may be indicated that type-1 resource allocation is used.

[PDSCH/PUSCH: related to time resource allocation]

Hereinafter, a time domain resource assignment method for a data channel in a next generation mobile communication system (5G or NR system) is described.

The base station may configure a table of time domain resource assignment information on a physical downlink shared channel (PDSCH) and a physical uplink shared channel (PUSCH) to the UE through higher layer signaling (e.g., RRC signaling). For the PDSCH, a table consisting of the maximum maxNrofDL-Allocations=16 number of entries may be configured, and for the PUSCH, a table consisting of the maximum maxNrofUL-Allocations=16 number of entries may be configured. In an embodiment, time domain resource assignment information may include PDCCH-to-PDSCH slot timing (corresponding to a time interval in units of a slot between a time point that receives the PDCCH and a time point that transmits the PDSCH scheduled by the received PDCCH, denoted as K0), PDCCH-to-PUSCH slot timing (corresponds to a time interval in units of a slot between a time point that receives the PDCCH and a time point that transmits the PUSCH scheduled by the received PDCCH, denoted as K2), information on a location and length of a start symbol scheduled by the PDSCH or the PUSCH within the slot, a mapping type of the PDSCH or the PUSCH, and the like. For example, information such as [Table 12] or [Table 13] may be transmitted from the base station to the UE.

[Table 12]

| PDSCH-TimeDomainResourceAllocationList information element |
|---|
| PDSCH-Time DomainResourceAllocationList : : = SEQUENCE (SIZE {1..maxNrofDL-Allocations}) OF |
| PDSCH-Time DomainResourceAllocation |
| PDSCH-Time DomainResourceAllocation :: = SEQUENCE [ |
| k0 |
| INTEGER {0..32} |
| OPTIONAL, - Need S |
| (PDCCH-to-PDSCH timing, slot unit) |
| mappingType ENUMERATED {typeA, typeB}, |
| {PDSCH mapping type} |
| startSymbolAndLength INTEGER (0..127) |
| {start symbol and length of PDSCH} |
| } |

[Table 13]

| PUSCH-TimeDomainResourceAllocation information element |
|---|
| PUSCH-Time DomainResourceAllocationList :: = SEQUENCE (SIZE {1..maxNrofUL-Allocations}) OF |
| PUSCH-Time DomainResourceAllocation |
| PUSCH-Time DomainResourceAllocation :: = SEQUENCE { |
| k2 INTEGER {0..32} OPTIONAL, - - Need S |
| (PDCCH-to-PUSCH timing, slot unit) |
| mappingType ENUMERATED {typeA, typeB}, |
| {PUSCH mapping type} |
| startSymbolAndLength INTEGER (0..127) |

| |
|---|
| {start symbol and length of PUSCH} |
| } |

The base station may notify the UE of one of entries in a table on the above-described time domain resource assignment information through L1 signaling (e.g., DCI) (e.g., may be indicated by a 'time domain resource assignment' field in the DCI). The UE may acquire time domain resource assignment information on a PDSCH or PUSCH based on the DCI received from the base station.

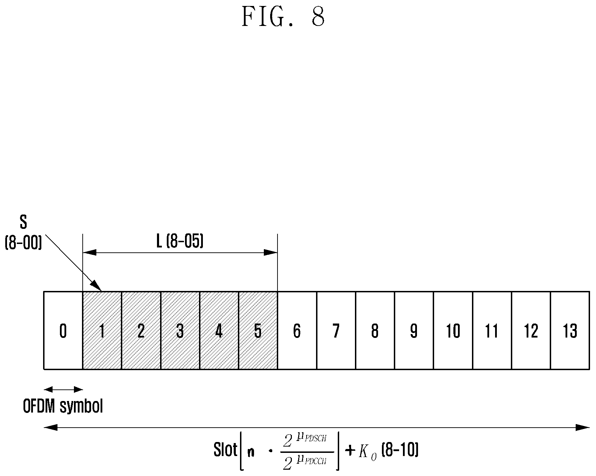

FIG. 8 is a diagram illustrating an example of time axis resource assignment of a PDSCH in a wireless communication system according to an embodiment of the disclosure.

With reference to FIG. 8, the base station may instruct a time axis location of a PDSCH resource according to

subcarrier spacing (SCS) $\mu_{PDSCH}$ and $\mu_{PDCCH}$ and scheduling offset K0 value of a data channel and control channel configured using an upper layer, and an OFDM symbol start location 8-00 and length 8-05 within one slot dynamically indicated through DCI.

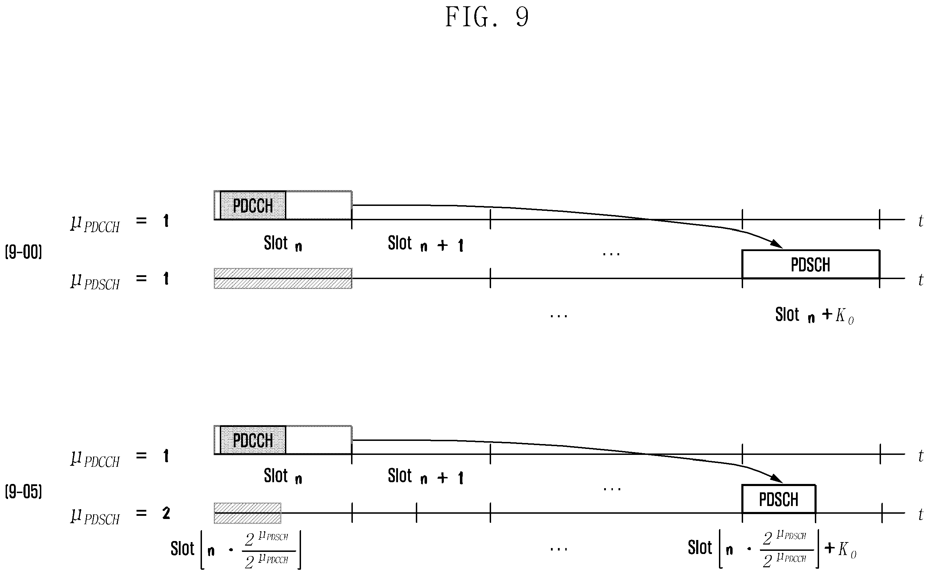

FIG. 9 is a diagram illustrating an example of time axis resource assignment according to subcarrier spacing of a data channel and a control channel in a wireless communication system according to an embodiment of the disclosure.

With reference to FIG. 9, in the case that subcarrier spacings of the data channel and the control channel are the same (9-00, $\mu_{PDSCH} = \mu_{PDCCH}$), slot numbers for data and control are the same; thus, the base station and the UE may generate scheduling offset according to predetermined slot offset K0. However, in the case that subcarrier spacings of the data channel and the control channel are different (9-05, $\mu_{PDSCH} \neq \mu_{PDCCH}$), slot numbers for data and control are different; thus, the base station and the UE may generate scheduling offset according to the predetermined slot offset K0 based on subcarrier spacing of the PDCCH.

[PUSCH: related to transmission method]

Hereinafter, a scheduling method of PUSCH transmission will be described. PUSCH transmission may be dynamically scheduled by a UL grant in DCI or may operate by a configured grant Type 1 or Type 2. Dynamic scheduling indication for PUSCH transmission is available in a DCI format 0_0 or 0_1.

Configured grant Type 1 PUSCH transmission may be quasi-statically configured through reception of configuredGrantConfig including rrc-ConfiguredUplinkGrant of [Table 14] through higher signaling without reception of the UL grant in DCI. Configured grant type 2 PUSCH transmission may be scheduled semi-persistently by the UL grant in DCI after receiving configuredGrantConfig not including rrc-ConfiguredUplinkGrant of [Table 14] through higher signaling. In the case that PUSCH transmission operates by the configured grant, parameters applied to PUSCH transmission are applied through configuredGrantConfig, which is higher signaling of [Table 14] except for dataScramblingIdentityPUSCH, txConfig, codebookSubset, maxRank, and scaling of UCI-OnPUSCH provided to a push-Config of [Table 15], which is higher signaling. When the UE receives a transformPrecoder in a configuredGrantConfig, which is higher signaling of [Table 14], the UE applies tp-pi2BPSK in a push-Config of [Table 15] to PUSCH transmission operating by the configured grant.

[Table 14]

```
ConfiguredGrantConfig ::=            SEQUENCE {
    frequencyHopping                 ENUMERATED {intraSlot, interSlot}
OPTIONAL,    -- Need S,
    cg-DMRS-Configuration            DMRS-UplinkConfig,
    mcs-Table                        ENUMERATED {qam256, qam64LowSE}
OPTIONAL,    -- Need S
    mcs-TableTransformPrecoder       ENUMERATED {qam256, qam64LowSE}
OPTIONAL,    -- Need S
    uci-OnPUSCH                      SetupRelease { CG-UCI-OnPUSCH }
OPTIONAL,    -- Need M
    resourceAllocation               ENUMERATED { resourceAllocationType0,
resourceAllocationType1, dynamicSwitch },
    rbg-Size                         ENUMERATED {config2}
OPTIONAL,    -- Need S
    powerControlLoopToUse            ENUMERATED {n0, n1},
    p0-PUSCH-Alpha                   P0-PUSCH-AlphaSetId,
    transformPrecoder                ENUMERATED {enabled, disabled}
OPTIONAL,    -- Need S
    nrofHARQ-Processes               INTEGER(1..16),
    repK                             ENUMERATED {n1, n2, n4, n8},
    repK-RV                          ENUMERATED {s1-0231, s2-0303, s3-0000}
OPTIONAL,    -- Need R
    periodicity                      ENUMERATED {
                                         sym2, sym7, sym1x14, sym2x14,
sym4x14, sym5x14, sym8x14, sym10x14, sym16x14, sym20x14,
                                         sym32x14, sym40x14, sym64x14,
sym80x14, sym128x14, sym160x14, sym256x14, sym320x14, sym512x14,
                                         sym640x14, sym1024x14, sym1280x14,
sym2560x14, sym5120x14,
                                         sym6, sym1x12, sym2x12, sym4x12,
sym5x12, sym8x12, sym10x12, sym16x12, sym20x12, sym32x12,
                                         sym40x12, sym64x12, sym80x12,
sym128x12, sym160x12, sym256x12, sym320x12, sym512x12, sym640x12,
                                         sym1280x12, sym2560x12
    },
    configuredGrantTimer             INTEGER (1..64)
OPTIONAL,    -- Need R
    rrc-ConfiguredUplinkGrant        SEQUENCE {
        timeDomainOffset             INTEGER (0..5119),
        timeDomainAllocation         INTEGER   (0..15),
```

```
        frequencyDomainAllocation          BIT STRING (SIZE(18)),
        antennaPort                         INTEGER (0..31),
        dmrs-SeqInitialization              INTEGER (0..1)
OPTIONAL,    -- Need R
        precodingAndNumberOfLayers          INTEGER (0..63),
        srs-ResourceIndicator               INTEGER (0..15)
OPTIONAL,    -- Need R
        mcsAndTBS                           INTEGER (0..31),
        frequencyHoppingOffset              INTEGER (1..
maxNrofPhysicalResourceBlocks-1)            OPTIONAL,    -- Need R
        pathlossReferenceIndex              INTEGER (0..maxNrofPUSCH-
PathlossReferenceRSs-1),

        ...

    }
OPTIONAL,    -- Need R

    ...

}
```

Hereinafter, a PUSCH transmission method will be described. A DMRS antenna port for PUSCH transmission is the same as an antenna port for SRS transmission. PUSCH transmission may follow a codebook-based transmission method and a non-codebook-based transmission method, respectively, according to whether a value of txConfig in a push-Config of [Table 15], which is higher signaling is 'codebook' or 'nonCodebook'.

As described above, PUSCH transmission may be dynamically scheduled through a DCI format 0_0 or 0_1, and be quasi-statically configured by the configured grant. When the UE is instructed to schedule PUSCH transmission through a DCI format 0_0, the UE performs a beam configuration for PUSCH transmission using a pucch-spatialRelationInfoID corresponding to an UE-specific PUCCH resource corresponding to the minimum ID within the activated uplink BWP in the serving cell, and in this case, PUSCH transmission is performed based on a single antenna port. The UE does not expect scheduling for PUSCH transmission through a DCI format 0_0 in a BWP in which a PUCCH resource including pucch-spatialRelationInfo is not configured. When the UE does not receive a configuration of txConfig in push-Config of [Table 15], the UE does not expect to be scheduled in a DCI format 0_1.

[Table 15]

```
PUSCH-Config ::=                         SEQUENCE {
      dataScramblingIdentityPUSCH          INTEGER (0..1023)
OPTIONAL,    -- Need S
      txConfig                             ENUMERATED {codebook, nonCodebook}
OPTIONAL,    -- Need S
      dmrs-UplinkForPUSCH-MappingTypeA       SetupRelease { DMRS-UplinkConfig }
OPTIONAL,    -- Need M
      dmrs-UplinkForPUSCH-MappingTypeB       SetupRelease { DMRS-UplinkConfig }
OPTIONAL,    -- Need M

      pusch-PowerControl                   PUSCH-PowerControl
OPTIONAL,    -- Need M
      frequencyHopping                     ENUMERATED {intraSlot, interSlot}
OPTIONAL,    -- Need S
      frequencyHoppingOffsetLists          SEQUENCE (SIZE (1..4)) OF INTEGER (1..
maxNrofPhysicalResourceBlocks-1)

OPTIONAL,    -- Need M
      resourceAllocation                   ENUMERATED { resourceAllocationType0,
resourceAllocationType1, dynamicSwitch},
      pusch-TimeDomainAllocationList         SetupRelease { PUSCH-
TimeDomainResourceAllocationList }          OPTIONAL,    -- Need M
      pusch-AggregationFactor              ENUMERATED { n2, n4, n8 }
OPTIONAL,    -- Need S
      mcs-Table                            ENUMERATED {qam256, qam64LowSE}
OPTIONAL,    -- Need S
      mcs-TableTransformPrecoder           ENUMERATED {qam256, qam64LowSE}
OPTIONAL,    -- Need S
      transformPrecoder                    ENUMERATED {enabled, disabled}
OPTIONAL,    -- Need S
      codebookSubset                       ENUMERATED
{fullyAndPartialAndNonCoherent, partialAndNonCoherent,nonCoherent}

OPTIONAL, -- Cond codebookBased
      maxRank                              INTEGER (1..4)
OPTIONAL, -- Cond codebookBased
      rbg-Size                             ENUMERATED { config2}
OPTIONAL, -- Need S
      uci-OnPUSCH                          SetupRelease { UCI-OnPUSCH}
OPTIONAL, -- Need M
      tp-pi2BPSK                           ENUMERATED {enabled}
OPTIONAL, -- Need S

      ...

}
```

Hereinafter, codebook-based PUSCH transmission will be described. Codebook-based PUSCH transmission may be dynamically scheduled through a DCI format 0_0 or 0_1, and operate quasi-statically by the configured grant. When the codebook-based PUSCH is dynamically scheduled by a DCI format 0_1 or quasi-statically configured by the configured grant, the UE determines a precoder for PUSCH transmission based on a SRS resource indicator (SRI), transmission precoding matrix indicator (TPMI), and transmission rank (the number of PUSCH transmission layers).

In this case, the SRI may be given through a field SRS resource indicator in DCI or may be configured through an srs-ResourceIndicator, which is higher signaling. When transmitting a codebook-based PUSCH, the UE may receive a configuration of at least one SRS resource, and receive a configuration of maximum two SRS resources. In the case that the UE receives the SRI through DCI, the SRS resource indicated by the corresponding SRI means an SRS resource corresponding to the SRI among SRS resources transmitted earlier than the PDCCH including the corresponding SRI. Further, TPMI and transmission rank may be given through a field precoding information and number of layers in DCI or may be configured through precodingAndNumberOfLayers, which is higher signaling. The TPMI is used for indicating a precoder applied to PUSCH transmission. When the UE receives a configuration of one SRS resource, the TPMI is used for indicating a precoder to be applied in the configured one SRS resource. When the UE receives a configuration of a plurality of SRS resources, the TPMI is used for indicating a precoder to be applied in the SRS resource indicated through the SRI.

A precoder to be used for PUSCH transmission is selected from an uplink codebook having the same number of antenna ports as a value of nrofSRS-Ports in SRS-Config, which is higher signaling. In codebook-based PUSCH transmission, the UE determines a codebook subset based on TPMI and codebookSubset in push-Config, which is higher signaling. The codebookSubset in push-Config, which is higher signaling may be configured to one of 'fullyAndPartialAndNonCoherent', 'partialAndNonCoherent', or 'nonCoherent' based on the UE capability reported by the UE to the base station. When the UE reported 'partialAndNonCoherent' with the UE capability, the UE does not expect that a value of codebookSubset, which is higher signaling is configured to 'fullyAndPartialAndNonCoherent'. Further, when the UE reported 'nonCoherent' with the UE capability, the UE does not expect that a value of codebookSubset, which is higher signaling is configured to 'fullyAndPartialAndNonCoherent' or 'partialAndNonCoherent'. In the case that nrofSRS-Ports in SRS-ResourceSet, which is higher signaling indicates two SRS antenna ports, the UE does not expect that a value of codebookSubset, which is higher signaling is configured to 'partialAndNonCoherent'.

The UE may receive a configuration of one SRS resource set in which a value of usage in the SRS-ResourceSet, which is higher signaling is configured to 'codebook', and one SRS resource in the corresponding SRS resource set may be indicated through the SRI. When several SRS resources are configured in an SRS resource set in which a usage value in SRS-ResourceSet, which is higher signaling is configured to 'codebook', the UE expects that a value of nrofSRS-Ports in the SRS-Resource, which is higher signaling is configured to the same value for all SRS resources.

The UE transmits one or a plurality of SRS resources included in an SRS resource set in which a value of usage is configured to 'codebook' to the base station according to higher signaling, and the base station selects one of SRS resources transmitted by the UE to instruct the UE to perform PUSCH transmission using transmission beam information of the SRS resource. In this case, in codebook-based PUSCH transmission, the SRI is used as information for selecting an index of one SRS resource and is included in DCI. Additionally, the base station includes information indicating the TPMI and rank to be used by the UE for PUSCH transmission in the DCI. The UE applies a rank indicated based on a transmission beam of the corresponding SRS resource and a precoder indicated by the TPMI to perform PUSCH transmission using the SRS resource indicated by the SRI.

Hereinafter, non-codebook based PUSCH transmission will be described. Non-codebook based PUSCH transmission may be dynamically scheduled through a DCI format 0_0 or 0_1, and operate quasi-statically by the configured grant. In the case that at least one SRS resource is configured in an SRS resource set in which a value of usage in the SRS-ResourceSet, which is higher signaling is configured to 'nonCodebook', the UE may receive scheduling of non-codebook based PUSCH transmission through a DCI format 0_1.

For an SRS resource set in which a value of usage in the SRS-ResourceSet, which is higher signaling is configured to 'nonCodebook', the UE may receive a configuration of one connected non-zero power CSI-RS (NZP CSI-RS) resource. The UE may calculate a precoder for SRS transmission through measurement of an NZP CSI-RS resource connected to the SRS resource set. When the difference between a last reception symbol of an aperiodic NZP CSI-RS resource connected to the SRS resource set and a first symbol of aperiodic SRS transmission in the UE is smaller than 42 symbols, the UE does not expect that information on a precoder for SRS transmission is updated.

When a value of resourceType in SRS-ResourceSet, which is higher signaling is configured to 'aperiodic', the connected NZP CSI-RS is indicated by an SRS request, which is a field in a DCI format 0_1 or 1_1. In this case, when the connected NZP CSI-RS resource is an aperiodic NZP CSI-RS resource, it indicates that the connected NZP CSI-RS exists in the case that a value of a field SRS request in a DCI format 0_1 or 1_1 is not '00'. In this case, the corresponding DCI should not indicate cross carrier or cross BWP scheduling. Further, when a value of the SRS request indicates existence of the NZP CSI-RS, the corresponding NZP CSI-RS is located in a slot in which the PDCCH including the SRS request field is transmitted. In this case, TCI states configured to the scheduled subcarriers are not configured to QCL-TypeD.

When a periodic or semi-persistent SRS resource set is configured, the connected NZP CSI-RS may be indicated through associatedCSI-RS in an SRS-ResourceSet, which is higher signaling. For non-codebook based transmission, the UE does not expect that spatialRelationInfo, which is higher signaling for an SRS resource and associatedCSI-RS in SRS-ResourceSet, which is higher signaling are configured together.

In the case that the UE are configured with a plurality of SRS resources, the UE may determine a precoder and transmission rank to be applied to PUSCH transmission based on the SRI indicated by the base station. In this case, the SRI may be indicated through a field SRS resource indicator in DCI or may be configured through a srs-ResourceIndicator, which is higher signaling. Similar to the above-described codebook-based PUSCH transmission, in the case that the UE receives an SRI through DCI, the SRS resource indicated by the corresponding SRI means the SRS resource corresponding to the SRI among SRS resources transmitted earlier than the PDCCH including the corresponding SRI. The UE may use one or a plurality of SRS resources for SRS transmission, and the number of maximum SRS resources that may be simultaneously transmitted in the same symbol within one SRS resource set and the number of maximum SRS resources are determined by an UE capability reported by the UE to the base station. In this case, SRS resources transmitted simultaneously by the UE occupy the same RB. The UE configures one SRS port for each SRS resource. A SRS resource set in which a value of usage in the SRS-ResourceSet, which is higher signaling is configured to 'nonCodebook' may be configured to only one, and SRS resources for non-codebook based PUSCH transmission may be configured to maximum four.

The base station transmits one NZP-CSI-RS connected to the SRS resource set to the UE, and the UE calculates a precoder to use when transmitting one or a plurality of SRS resources in the corresponding SRS resource set based on the measurement result upon receiving the corresponding NZP-CSI-RS. The UE applies the calculated precoder when transmitting one or a plurality of SRS resources in the SRS resource set in which the usage is configured to 'nonCodebook' to the base station, and the base station selects one or a plurality of SRS resources among one or a plurality of received SRS resources. In this case, in non-codebook based PUSCH transmission, the SRI indicates an index capable of expressing a combination of one or a plurality of SRS resources, and the SRI is included in DCI. In this case, the number of SRS resources indicated by the SRI transmitted by the base station may be the number of transmission layers of the PUSCH, and the UE applies a precoder applied to transmission of the SRS resource to each layer to transmit the PUSCH.

[Related to CA/DC]

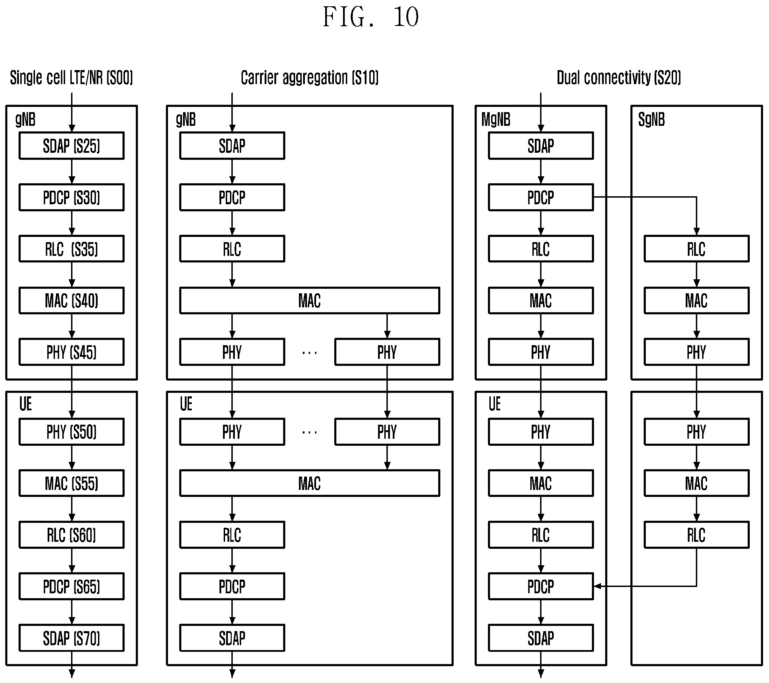

FIG. 10 is a block diagram illustrating a radio protocol structure of a base station and a UE in a single cell, carrier aggregation, and dual connectivity situation according to an embodiment of the disclosure.

With reference to FIG. 10, a radio protocol of a next generation mobile communication system includes NR service data adaptation protocols (SDAPs) S25 and S70, NR packet data convergence protocols (PDCPs) S30 and S65, NR radio link controls (RLCs) S35 and S60, and NR medium access controls (MACs) S40 and S55 in the UE and the NR base station, respectively.

Main functions of the NR SDAPs S25 and S70 may include some of the following functions.

- transfer of user plane data
- mapping between a QoS flow and a DRB for both DL and UL
- marking QoS flow ID in both DL and UL packets
- reflective QoS flow to DRB mapping for the UL SDAP PDUs.

For the SDAP layer device, the UE may receive a configuration on whether to use a header of the SDAP layer device or whether to use a function of the SDAP layer device for each PDCP layer device, each bearer, or each logical channel with a radio resource control (RRC) message, and in the case that the SDAP header is configured, the UE may instruct to update or reconfigure mapping information on uplink and downlink QoS flows and data bearers with non-access stratum (NAS) reflective quality of service (QoS) and access stratum (AS) reflective QoS of the SDAP header. The SDAP header may include QoS flow ID information indicating a QoS. The QoS information may be used as a data processing priority and scheduling information for supporting a smooth service.

Main functions of the NR PDCPs S30 and S65 may include some of the following functions.

- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink.

In the above description, reordering of the NR PDCP device may refer to a function of reordering PDCP PDUs received from a lower layer based on a PDCP sequence number (SN) and include a function of delivering data to a higher layer in the rearranged order. Alternatively, the reordering of the NR PDCP device may include a function of directly delivering data without considering the order, a function of rearranging the order and recording lost PDCP PDUs, a function of reporting a status of lost PDCP PDUs to the transmitting side, and a function of requesting retransmission of lost PDCP PDUs.

Main functions of the NR RLCs S35 and S60 may include some of the following functions.

- Transfer of upper layer PDUs

- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

In the above description, in-sequence delivery of the NR RLC device may mean a function of sequentially delivering RLC SDUs received from a lower layer to a higher layer. In-sequence delivery of the NR RLC device may include a function of reassembling and delivering several RLC SDUs in the case that an original RLC SDU is divided into several RLC SDUs and received, a function of rearranging received RLC PDUs based on an RLC sequence number (SN) or a PDCP sequence number (SN), a function of rearranging the order of RLC PDUs and recording lost RLC PDUs, a function of reporting a status of lost RLC PDUs to the transmitting side, and a function of requesting retransmission of lost RLC PDUs. In-sequence delivery of the NR RLC device may include a function of sequentially delivering, in the case that there is a lost RLC SDU, only RLC SDUs before the lost RLC SDU to a higher layer or a function of sequentially delivering all RLC SDUs received before the timer starts to the higher layer, when a predetermined timer has expired even if there is a lost RLC SDU. Alternatively, in-sequence delivery of the NR RLC device may include a function of sequentially delivering all RLC SDUs received so far to the higher layer, when a predetermined timer has expired even if there is a lost RLC SDU. Further, the NR RLC device may process the RLC PDUs in the order of reception (regardless of the order of serial numbers and sequence numbers, in the order of arrival) and transfer the RLC PDUs to the PDCP device regardless of order (out-of sequence delivery), and in the case of a segment, the NR RLC device may receive segments stored in a buffer or to be received later, reconstitute segments into one complete RLC PDU and process, and then transfer the one complete RLC PDU to the PDCP device. The NR RLC layer may not include a concatenation function, and the concatenation function may be performed in the NR RLC layer or may be replaced with a multiplexing function of the NR MAC layer.

In the above description, out-of-sequence delivery of the NR RLC device may mean a function of directly delivering RLC SDUs received from a lower layer to a higher layer regardless of order and include a function of reassembling and delivering several RLC SDUs in the case that an original RLC SDU is divided into several RLC SDUs and received and a function of storing RLC sequence numbers (SNs) or PDCP SNs of received RLC PDUs, arranging the order thereof, and recording lost RLC PDUs.

The NR MACs S40 and S55 may be connected to several NR RLC layer devices constituted in one UE, and main functions of the NR MAC may include some of the following functions.

- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

NR PHY layers S45 and S50 may perform operations of channel-coding and modulating higher layer data, making the higher layer data into OFDM symbols and transmitting the OFDM symbols through a radio channel, or demodulating OFDM symbols received through a radio channel, channel-decoding the OFDM symbols, and delivering the OFDM symbols to a higher layer.

A detailed structure of the radio protocol structure may be variously changed according to a carrier (or cell) operation method. For example, in the case that the base station transmits data to the UE based on a single carrier (or cell), the base station and the UE use a protocol structure having a single structure for each layer, as in S00. However, in the case that the base station transmits data to the UE based on carrier aggregation (CA) using multiple carriers in a single TRP, the base station and the UE have a single structure up to RLC, as in S10, but use a protocol structure for multiplexing the PHY layer through the MAC layer. As another example, in the case that the base station transmits data to the UE based on dual connectivity (DC) using multiple carriers in multiple TRPs, the base station and the UE have a single structure up to RLC, as in S20, but use a protocol structure for multiplexing the PHY layer through the MAC layer.

With reference to the above-described descriptions related to the PDCCH and beam configuration, it is difficult to achieve required reliability in scenarios requiring high reliability such as URLLC because PDCCH repetition transmission is not currently supported in Rel-15 and Rel-16 NR. In the disclosure, a PDCCH repetition transmission method through multiple transmission points (TRPs) is provided to improve PDCCH reception reliability of the UE. Specific methods thereof are specifically described in the following embodiments.

Hereinafter, embodiments of the disclosure will be described in detail with accompanying drawings. The contents of the disclosure are applicable to FDD and TDD systems. Hereinafter, higher signaling (or higher layer signaling) in the disclosure is a method of transmitting a signal from a base station to a UE using a downlink data channel of a physical layer, or from a UE to a base station using an uplink data channel of a physical layer and may be referred to as RRC signaling, PDCP signaling, or a medium access control (MAC) control element (MAC CE).

Hereinafter, in the disclosure, in determining whether cooperative communication is applied, it is possible for the UE to use various methods in which a PDCCH(s) allocating a PDSCH to which cooperative communication is applied has(have) a specific format, or in which a PDCCH(s) allocating a PDSCH to which cooperative communication is applied include(s) a specific indicator indicating whether cooperative communication is applied, or in which a PDCCH(s) allocating a PDSCH to which cooperative communication is applied is(are) scrambled with specific RNTI, or in which cooperative communication application is assumed at a specific segment indicated by a higher layer, and the like. Hereinafter, for convenience of description, the case that the UE receives a PDSCH to which cooperative communication is applied based on conditions similar to the above description will be referred to as an NC-JT case.

Hereinafter, in the disclosure, determining a priority between A and B may be variously referred to as selecting one having a higher priority according to a predetermined priority rule and performing a corresponding operation or omitting or dropping an operation for one having a lower priority.

Hereinafter, in the disclosure, the examples are described through a plurality of embodiments, but they are not independent, and one or more embodiments may be applied simultaneously or in combination.

Hereinafter, embodiments of the disclosure will be described in detail with accompanying drawings. Hereinafter, the base station is a subject performing resource allocation of a terminal, and may be at least one of a gNode B, a gNB, an eNode B, a node B, a base station (BS), a radio access unit, a base station controller, or a node on a network. The terminal may include a user equipment (UE), a mobile station (MS), a cellular phone, a smart phone, a computer, or a multimedia system capable of performing a communication function. Hereinafter, an embodiment of the disclosure is described using a 5G system as an example, but the embodiment of the disclosure may be applied to other communication systems having a similar technical background or channel type. For example, LTE or LTE-A mobile communication and mobile communication technology developed after 5G may be included therein. Accordingly, the embodiments of the disclosure may be applied to other communication systems through some modification without significantly departing from the scope of the disclosure by determination of a person skilled in the art. The contents of the disclosure are applicable to FDD and TDD systems.

Further, in describing the disclosure, in the case that it is determined that a detailed description of a related function or constitution may unnecessarily obscure the gist of the disclosure, a detailed description thereof will be omitted. Terms described below are terms defined in consideration of functions in the disclosure, which may vary according to intentions or customs of users and operators. Therefore, the definition should be made based on the content throughout this specification.

Hereinafter, in describing the disclosure, higher layer signaling may be signaling corresponding to at least one or a combination of one or more of the following signaling.

- MIB (Master Information Block)
- SIB (System Information Block) or SIB X (X=1, 2, ...)
- RRC (Radio Resource Control)
- MAC (Medium Access Control) CE (Control Element)

Further, L1 signaling may be signaling corresponding to at least one or a combination of one or more of signaling methods using the following physical layer channels or signaling.

- PDCCH (Physical Downlink Control Channel)
- DCI (Downlink Control Information)
- UE-specific DCI
- Group common DCI
- Common DCI
- Scheduling DCI (e.g., DCI used for the purpose of scheduling downlink or uplink data)
- Non-scheduling DCI (e.g., DCI that is not for the purpose of scheduling downlink or uplink data)
- PUCCH (Physical Uplink Control Channel)

- UCI (Uplink Control Information)

Hereinafter, in the disclosure, determining a priority between A and B may be variously referred to as selecting one having a higher priority according to a predetermined priority rule and performing a corresponding operation or omitting or dropping an operation for one having a lower priority.

Hereinafter, in the disclosure, the examples are described through a plurality of embodiments, but they are not independent, and one or more embodiments may be applied simultaneously or in combination.

[Related to SBFD]

In 3GPP, a subband non-overlapping full duplex (SBFD) is being discussed with a new duplex method based on NR. The SBFD is technology that receives uplink transmission from the UE as much as increased uplink resources to expand uplink coverage of the UE by utilizing a part of downlink resources as uplink resources in a TDD spectrum of frequencies of 6 GHz or less or 6 GHz or more and that receives feedback on downlink transmission from the UE in the expanded uplink resources, thereby reducing a feedback delay. In the disclosure, a UE that may receive information on whether to support an SBFD from the base station and that may perform uplink transmission in a part of downlink resources may be referred to as an SBFD UE (SBFD-capable UE) for convenience. The following methods may be considered to define the SBFD method in the standard and in order for the SBFD UE to determine that the SBFD is supported at a specific cell (or frequency, frequency band).

First method. In addition to the existing unpaired spectrum (or time division duplex (TDD)) or paired spectrum (or frequency division duplex (FDD)) frame structure type, another frame structure type (e.g., frame structure type 2) may be introduced to define the above SBFD. The above frame structure type 2 may be defined as being supported at the specific frequency or frequency band, or the base station may instruct to the UE whether to support an SBFD through system information. The SBFD UE may receive system information including whether to support an SBFD and determine whether to support an SBFD in the specific cell (or frequency, frequency band).

Second method. It may be indicated whether to additionally support the SBFD at a specific frequency or frequency band of the existing unpaired spectrum (or TDD) without defining a new frame structure type. In the second method, it may be defined whether to additionally support the SBFD at a specific frequency or frequency band of the existing unpaired spectrum, or the base station may instruct to the UE whether to support an SBFD through system information. The SBFD UE may receive system information including whether to support an SBFD to determine whether to support an SBFD in the specific cell (or frequency, frequency band).

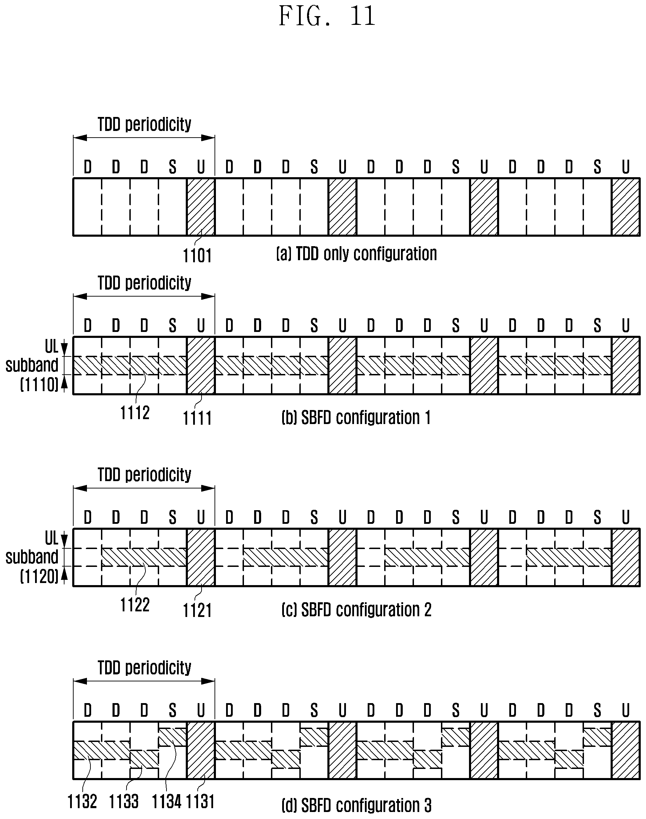

Information on whether to support an SBFD in the first and second methods may be information indicating whether to indirectly support an SBFD (e.g., SBFD resource constitution information in FIG. 11 to be described later) by additionally configuring a part of the downlink resource as an uplink resource in addition to a configuration on TDD UL (uplink)-DL (downlink) resource constitution information indicating TDD downlink slot (or symbol) resources and uplink slot (or symbol) resources or may be information indicating whether to directly support an SBFD.

In the disclosure, the SBFD UE may receive a synchronization signal block at initial cell access for accessing a cell (or the base station) to acquire cell synchronization. A process of acquiring cell synchronization may be the same in the SBFD UE and the existing TDD UE. Thereafter, the SBFD UE may determine whether the cell supports an SBFD through MIB acquisition, SIB acquisition, or a random access process.

System information for transmitting information on whether to support the SBFD may be system information to be transmitted separately from system information for a UE (e.g., existing TDD UE) supporting another version of standard within a cell, and the SBFD UE may acquire all or part of system information to be transmitted separately from system information for the existing TDD UE to determine whether to support the SBFD. In the case that the SBFD UE acquires only system information for the existing TDD UE or acquires system information on non-support of an SBFD, the SBFD UE may determine that the cell (or the base station) supports only a TDD.

In the case that information on whether to support the SBFD is included in system information for a UE (e.g., existing TDD UE) supporting another version of standard, the information on whether to support the SBFD may be inserted at the very end so as to have no effect on acquisition of system information of the existing TDD UE. In the case that the SBFD UE fails to acquire last inserted information on whether to support the SBFD or acquires information that the SBFD is not supported, the SBFD UE may determine that the cell (or the base station) supports only a TDD.

In the case that information on whether to support the SBFD is included in system information for a UE (e.g., existing TDD UE) supporting another version of standard, the information on whether to support the SBFD may be transmitted to a separate PDSCH so as to have no effect on acquisition of system information of the existing TDD UE. That is, a UE that does not support an SBFD may receive a first SIB (or SIB1) including existing TDD related system information from a first PDSCH. A UE supporting an SBFD may receive a first SIB (or SIB) including existing TDD related system information from a first PDSCH, and receive a second SIB including SBFD related system information from a second PDSCH. Here, the first PDSCH and the second PDSCH may be scheduled by a first PDCCH and a second PDCCH, and a cyclic redundancy code (CRC) of the first PDCCH and the second PDCCH may be scrambled with the same RNTI (e.g., SI-RNTI). A search space for monitoring the second PDCCH may be acquired from system information of the first PDSCH, and if a search space for monitoring the second PDCCH is not acquired (i.e., if system information of the first PDSCH does not include information on a search space), the second PDCCH may be received in the same search space as that of the first PDCCH.

As described above, in the case that the SBFD UE determines that the cell (or the base station) supports only a TDD, the SBFD UE may perform random access procedures and data/control signal transmission and reception in the same way as that of an existing TDD UE.

The base station may constitute a separate random access resource for each of the existing TDD UEs or SBFD UEs (e.g., an SBFD UE supporting duplex communication and an SBFD UE supporting half-duplex communication), and transmit constitution information (control information or constitution information indicating time-frequency resources that may be used for a PRACH) for the random access resource to the SBFD UE through system information. System information for transmitting information on the random access resource may be separately transmitted system information different from system information for a UE (e.g., existing TDD UE) supporting another version of standard within a cell.

The base station may configure separate random access resources to the SBFD UE and the TDD UE supporting another version of standard to distinguish whether the TDD UE supporting the another version of standard performs random access or the SBFD UE performs random access. For example, a separate random access resource configured to the SBFD UE may be a resource in which the existing TDD UE determines as a downlink time resource, and the SBFD UE may perform random access through an uplink resource (or a separate random access resource) configured to some frequencies of the downlink time resource; thus, the base station may determine that a UE that has attempted random access in the uplink resource is an SBFD UE.

Alternatively, the base station may configure a common random access resource to all UEs in the cell without configuring a separate random access resource for the SBFD UE. In this case, constitution information on the random access resource may be transmitted to all UEs in the cell through system information, and the SBFD UE that has received the system information may perform random access to the random access resource. Thereafter, the SBFD UE may complete a random access process and proceed in an RRC connection mode for transmitting and receiving data to and from the cell. After the RRC access mode, the SBFD UE may receive, from the base station, an upper or physical signal that may determine that some frequency resources of the downlink time resource are configured as uplink resources and perform an SBFD operation (for example, transmit an uplink signal in the uplink resource).

In the case that the SBFD UE determines that the cell supports an SBFD, the SBFD UE may transmit capability information including at least one of information on whether the UE supports an SBFD, information on whether the UE supports full-duplex communication or half-duplex communication, or the number of transmission or reception antennas in which the UE has (or supports) to the base station, thereby notifying the base station that the UE attempting to access is an SBFD UE. Alternatively, in the case that half-duplex communication support is required for the SBFD UE, whether the half-duplex communication is supported may be omitted from capability information. Reporting of the SBFD UE on the capability information may be performed to the base station through a random access process, be performed to the base station after completing the random access process, or be performed to the base station after proceeding in an RRC connection mode for transmitting and receiving data to and from cells.

The SBFD UE may support half-duplex communication that performs only uplink transmission or downlink reception at a single moment, as in an existing TDD UE, or the SBFD UE may support full-duplex communication that performs both uplink transmission and downlink reception at a single moment. Therefore, the SBFD UE may report information on whether the SBFD UE supports half-duplex communication or full-duplex communication to the base station through capability reporting, and after the reporting, the base station may configure to the SBFD UE whether the SBFD UE will transmit and receive using half-duplex communication or full-duplex communication. In the case that the SBFD UE reports the capability for half-duplex communication to the base station, a duplexer does not generally exist; thus, a switching gap for changing an RF may be required between transmission and reception in the case of operating in FDD or TDD.

FIG. 11 is a diagram illustrating an example of operating an SBFD in a TDD band of a wireless communication system to which the disclosure is applied.

FIG. 11A illustrates the case that a TDD is operated in a specific frequency band. In a cell operating the TDD, the base station may transmit and receive signals including data/control information in a downlink slot (or symbol), an uplink slot (or symbol) 1101, and a flexible slot (or symbol) to and from the existing TDD UE or SBFD UE based on a configuration on TDD UL-DL resource constitution information indicating TDD downlink slot (or symbol) resources and uplink slot (or symbol) resources.

In FIG. 11, it may be assumed that a DDDSU slot format is configured according to TDD UL-DL resource constitution information. Here, 'D' is a slot composed of all downlink symbols, 'U' is a slot composed of all uplink symbols, and 'S' is a slot other than 'D' or 'U', that is, a slot including both a downlink symbol and an uplink symbol or including a flexible symbol. Here, for convenience, it may be assumed that S is composed of 12 downlink symbols and 2 flexible symbols. The DDDSU slot format may be repeated according to TDD UL-DL resource constitution information. That is, a repetition period of a TDD configuration may be 5 slots (5ms in the case of 15kHz SCS, 2.5ms in the case of 30kHz SCS, and the like).

Hereinafter, FIGS. 11B, 11C, and 11D illustrate the case that an SBFD is operated with a TDD in a specific frequency band.

With reference to FIG. 11B, the UE may receive a configuration of some of frequency bands of the cell as a frequency band 1110 capable of transmitting an uplink. This band may be referred to as an uplink subband (UL subband). The UL subband may be applied to all symbols of all slots. The UE may transmit an uplink channel or signal scheduled to all symbols 1112 within the UL subband. However, the UE may not transmit an uplink channel or signal in a band other than the UL subband.

With reference to FIG. 11C, the UE may receive a configuration of some of frequency bands of the cell as a frequency band 1120 capable of transmitting an uplink and receive a configuration of a time domain in which the frequency band is activated. Here, this frequency band may be referred to as an uplink subband (UL subband). In FIG. 11C, an UL subband was deactivated in a first slot, and an UL subband may be activated in the remaining slots. Accordingly, the UE may transmit an uplink channel or signal in an UL subband 1122 of the remaining slots. For reference, in FIG. 11C, it has been described that the UL subband was activated in units of a slot, but activation of the UL subband may be configured in units of a symbol.

With reference to FIG. 11D, the UE may receive a configuration of a time-frequency resource capable of transmitting an uplink. The UE may receive a configuration of one or more time-frequency resources as time-frequency resources capable of transmitting an uplink. For example, the UE may receive a configuration of some frequency bands 1132 of a first slot and a second slot to time-frequency resources capable of transmitting an uplink. Further, the UE may receive a configuration of some frequency bands 1133 of a third slot and some frequency bands 1134 of a fourth slot as time-frequency resources capable of transmitting an uplink.

In the following description, a time-frequency resource capable of transmitting an uplink within a downlink symbol or slot may be referred to as an SBFD resource. A symbol in which an uplink subband is configured within a downlink symbol may be referred to as an SBFD symbol. Further, a time-frequency resource capable of receiving a downlink within an uplink symbol or slot may be referred to as an SBFD resource. A symbol in which a downlink subband is configured within the uplink symbol may be referred to as an SBFD symbol.

For convenience, in the disclosure, a band capable of receiving a downlink channel or signal excluding an uplink subband is referred to as a downlink subband. The UE may configure maximum one uplink subband and maximum two downlink subbands in one symbol. For example, the UE may receive a configuration of one of {uplink subband, downlink subband}, {downlink subband, uplink subband}, or {first downlink subband, uplink subband, second downlink subband) in the frequency domain.

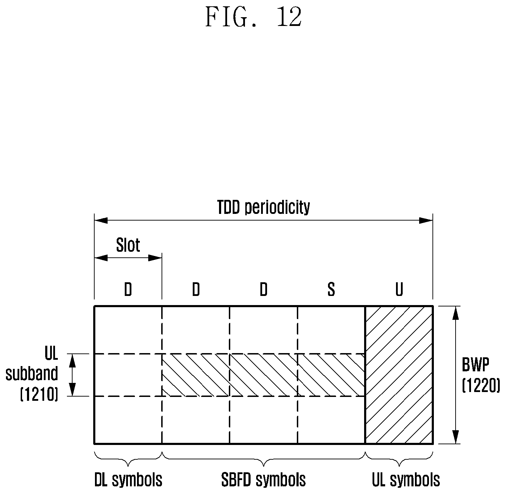

FIG. 12 is used for describing this embodiment. FIG. 12 illustrates an example, and this embodiment may be equally applied to other embodiments. With reference to FIG. 12, the UE may receive a configuration of an uplink symbol, a downlink symbol, or a flexible symbol according to a TDD configuration. Here, a slot 'D' is a slot in which all symbols in the slot are downlink symbols. A slot 'U' is a slot in which all symbols in the slot are uplink symbols. A slot 'S' is a slot other than a slot 'D' or a slot 'U'. The UE may receive a configuration of an UL BWP 1220. The UE may receive a configuration of an UL subband 1210 within the DL symbol. In this embodiment, it is assumed that the UL BWP includes 275 RBs and that the UL subband includes 50 RBs. It is assumed that the UL subband is not configured in a first slot. Therefore, the first slot is referred to as a DL slot, and a symbol included in the first slot is referred to as a DL symbol. It is assumed that the UL subband is configured in second, third, and fourth slots. Therefore, the second, third, and fourth slots are referred to as SBFD slots, and symbols included in the second, third, and fourth slots are referred to as SBFD symbols. A fifth slot is referred to as an uplink slot, and symbols included in the fifth slot are referred to as UL symbols.

An antenna of the base station may be composed of two antenna panels. The antenna panel may include one or a plurality of antenna elements. For convenience, the term "antenna panel" is used herein, but the panel may be equally referred to as other terms such as an antenna group or a panel group. One of the two antenna panels is referred to as a first panel, and the other one thereof is referred to as a second panel. The two antenna panels may include the same number of antenna elements or different numbers of antenna elements. Further, the two antenna panels may include the same number of transceivers (TxRUs) or different numbers of TxRUs. Although the disclosure describes two antenna panels, the disclosure may be applied to a plurality of antenna panels.

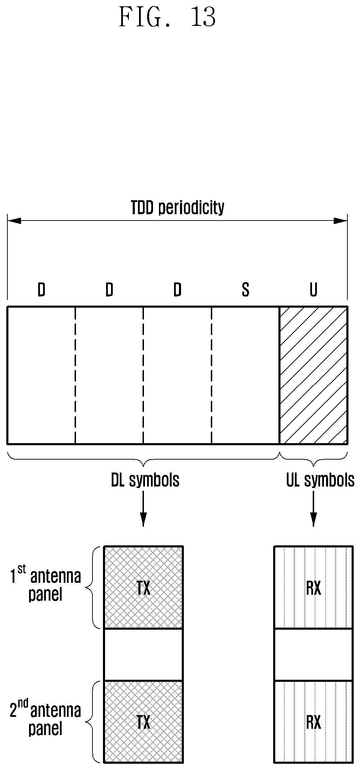

With reference to FIG. 13, an antenna structure of the base station for a TDD operation is determined as follows. In the case of a TDD configuration, first four slots are downlink slots, and a last slot is an uplink slot. The base station may use two antenna panels for downlink transmission in a downlink slot or a downlink symbol. Further, the base station may use two antenna panels for uplink reception in an uplink slot or an uplink symbol.

With reference to FIG. 13, antenna panels used in symbols capable of performing downlink transmission are always the same as two panels. Further, antenna panels used in symbols capable of performing uplink reception are always the same as two panels. Further, the base station uses antenna panels used for downlink transmission for uplink reception. That is, the base station may use the same antenna panels when transmitting a downlink and when receiving an uplink.

[Antenna operation method for SBFD operation]

For an SBFD operation, an antenna structure of the base station may be determined as follows.

The base station may perform an SBFD operation using two antenna panels in various ways. An antenna operation method described below means an antenna panel used according to a type or use of a symbol in an SBFD operation.

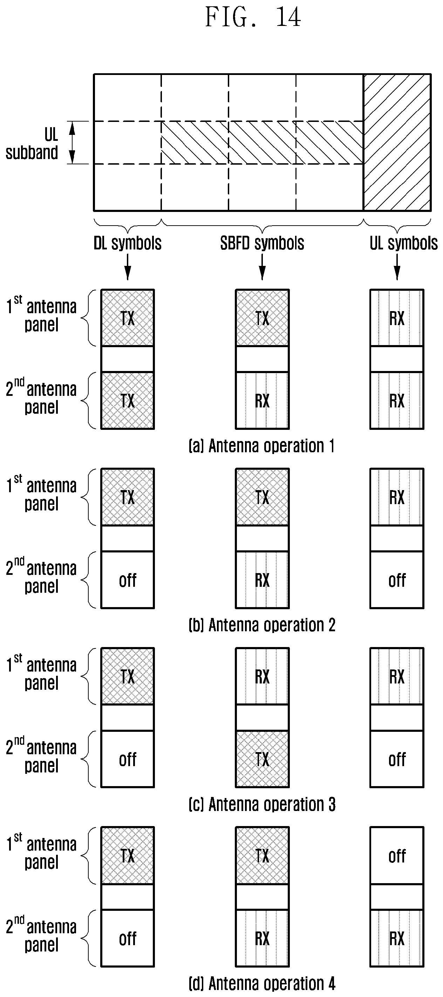

- In **a first antenna operation method**, with reference to FIG. 14A, the base station may use both a first antenna panel and a second antenna panel for downlink transmission when transmitting a downlink channel/signal in a downlink symbol/slot. The base station may use both a first panel and a second panel for uplink reception when receiving an uplink channel/signal in an uplink symbol/slot. The base station may use the first panel for downlink transmission and the second panel for uplink reception when transmitting a downlink channel/signal and receiving an uplink channel/signal in an SBFD symbol/slot. According to the first method, the number of antenna elements or the number of antenna panels used for downlink transmission in a downlink symbol/slot may be greater than the number of antenna elements or the number of antenna panels used for downlink transmission in an SBFD symbol/slot. Further, the number of antenna elements or the number of antenna panels used for uplink reception in an uplink symbol/slot may be greater than the number of antenna elements or the number of antenna panels used for uplink reception in an SBFD symbol/slot. Therefore, the number of antenna elements or the number of antenna panels used for downlink transmission may vary according to which symbol the downlink channel/signal received by the UE was transmitted in, and accordingly, characteristics of a transmitted signal of the base station may vary. Therefore, the UE needs to know which antenna mode (the antenna mode refers to the number of panels and the number of antenna elements used for downlink transmission and the number of panels and the number of antenna elements used for uplink reception according to the antenna operation method) the base station uses. This equally occurs in the uplink. That is, the number of antenna elements or the number of antenna panels used for uplink transmission may vary according to which symbol the uplink channel/signal transmitted by the UE was transmitted in, and accordingly, characteristics of the received signal in the base station may vary.

- In **a second antenna operation method,** with reference to FIG. 14B, when the base station transmits a downlink channel/signal in a downlink symbol/slot, the base station may use the first panel for downlink transmission. When the base station receives an uplink channel/signal in an uplink symbol/slot, the base station may use the first panel for uplink reception. When the base station transmits a downlink channel/signal and receives an uplink channel/signal in an SBFD symbol/slot, the base station may use the first panel for downlink transmission and the second panel for uplink reception. In this method, the antenna panel or antenna element used by the base station for downlink transmission is the same in the downlink symbol/slot or the SBFD symbol/slot. However, the antenna panel or antenna element used by the base station for uplink reception may be different in the uplink symbol/slot or the SBFD symbol/slot. Therefore, the antenna element used for uplink transmission varies according to which symbol the uplink channel/signal transmitted by the UE was transmitted in, and accordingly, characteristics of a received signal in the base station may vary.

- In **a third antenna operation method,** with reference to FIG. 14C, when the base station transmits a downlink channel/signal in a downlink symbol/slot, the base station may use the first panel for downlink transmission. When the base station receives an uplink channel/signal in an uplink symbol/slot, the base station may use the first panel for uplink reception. When the base station transmits a downlink channel/signal and receives an uplink channel/signal in an SBFD symbol/slot, the base station may use the first panel for uplink reception and the second panel for downlink transmission. In this method, the antenna panel or antenna element used by the base station for uplink reception is the same in the uplink symbol/slot or the SBFD symbol/slot. However, the antenna panel or antenna element used by the base station for downlink transmission may be different in the downlink symbol/slot or the SBFD symbol/slot. Therefore, the antenna element used for downlink transmission varies according to which symbol the downlink channel/signal received by the UE was transmitted in, and accordingly, characteristics of a transmitted signal in the base station may vary.

- In **a fourth antenna operation method,** with reference to FIG. 14D, when the base station transmits a downlink channel/signal in a downlink symbol/slot, the base station may use the first panel for downlink transmission. When the base station receives an uplink channel/signal in an uplink symbol/slot, the base station may use the second panel for uplink reception. When the base station transmits a downlink channel/signal and receives an uplink channel/signal in an SBFD symbol/slot, the base station may use the first panel for downlink transmission and the second panel for uplink reception. In this method, the antenna panel or antenna element used by the base station for downlink transmission is the same in the downlink symbol/slot or the SBFD symbol/slot. Further, the antenna panel or antenna element used by the base station for uplink reception is the same in the uplink symbol/slot or the SBFD symbol/slot. Therefore, the UE may not need separate information on the antenna mode.

The foregoing four methods are examples of antenna operation methods for various SBFD operations. The disclosure is not limited to the four antenna operation methods.

[Embodiment 1: SBFD antenna configuration for each symbol type]

The base station may instruct the UE on the symbol type for an SBFD operation. Therefore, the UE may determine which symbol type each symbol is. The symbol type may include a downlink symbol, an uplink symbol, a flexible symbol, or an SBFD symbol. For reference, the flexible symbol may be regarded as one of a downlink symbol, an uplink symbol, or an SBFD symbol. For example, in the case that only a downlink channel/signal is transmitted in the flexible symbol, the flexible symbol may be regarded as a downlink symbol, in the case that only an uplink channel/signal is received in the flexible symbol, the flexible symbol may be regarded as an uplink symbol, and in the case that downlink channel/signal transmission and uplink channel/signal transmission are simultaneously performed in the flexible symbol, the flexible symbol may be regarded as an SBFD symbol.

In Embodiment 1 of the disclosure, the base station may notify the UE of which antenna mode was used for each symbol type for an SBFD operation. That is, the base station may configure an antenna mode to be used for a downlink symbol type to the UE, and the UE may assume an antenna mode according to the configuration when receiving a downlink channel or signal in the downlink symbol type. This may be applied to all downlink symbols. The base station may configure an antenna mode to be used for an uplink symbol type to the UE, and the UE may assume an antenna mode according to the configuration when transmitting an uplink channel or signal in the uplink symbol type. This may be applied to all uplink symbols. That is, the base station may configure an antenna mode to be used for an SBFD symbol type to the UE, and the UE may assume an antenna mode according to the configuration when receiving a downlink channel or signal or receiving an uplink channel or signal in the SBFD symbol type. This may be applied to all SBFD symbols.

In a first method of indicating information on the antenna mode, the base station may indicate an index of the antenna panel to be used in each symbol type. More specifically, information on the antenna structure may include at least one of the following information:

- Index of an antenna panel to be used for downlink transmission in a downlink symbol/slot.
- Index of an antenna panel to be used for uplink reception in an uplink symbol/slot.
- Index of an antenna panel to be used for downlink transmission and index of an antenna panel to be used for uplink reception in an SBFD symbol/slot.

For example, in the case of the first antenna operation method described above,

- Index of an antenna panel to be used for downlink transmission in a downlink symbol/slot = {1, 2}
- Index of an antenna panel to be used for uplink reception in an uplink symbol/slot = {1, 2}
- Index of an antenna panel to be used for downlink transmission in an SBFD symbol/slot = {1}, Index of an antenna panel to be used for downlink transmission = {2}

In the case of a second antenna operation method,

- Index of an antenna panel to be used for downlink transmission in a downlink symbol/slot = {1}
- Index of an antenna panel to be used for uplink reception in an uplink symbol/slot = {1}
- Index of an antenna panel to be used for downlink transmission in an SBFD symbol/slot = {1}, index of an antenna panel to be used for uplink reception = {2}

In the case of a third antenna operation method,

- Index of an antenna panel to be used for downlink transmission in a downlink symbol/slot = {1}
- Index of an antenna panel to be used for uplink reception in an uplink symbol/slot = {1}
- Index of an antenna panel to be used for downlink transmission in an SBFD symbol/slot = {2}, Index of an antenna panel to be used for uplink reception = {1}

In the case of a fourth antenna operation method,

- Index of an antenna panel to be used for downlink transmission in a downlink symbol/slot = {1}

- Index of an antenna panel to be used for uplink reception in an uplink symbol/slot = {2}
- Index of an antenna panel to be used for downlink transmission in an SBFD symbol/slot = {1}, index of an antenna panel to be used for uplink reception = {2}

In a second method of indicating information on an antenna structure, it may be indicated which symbol type is used for each antenna panel. More specifically, in the second method, the antenna structure may be configured to the UE using the following information.

- Symbol types that may be used for the first antenna panel. One or more of {DL, UL, SBFD_DL, SBFD_UL} may be indicated.
- Symbol type that may be used for the second antenna panel. One or more of {DL, UL, SBFD_DL, SBFD_UL} may be indicated.

Here, when a DL is included in an i-th antenna panel, the i-th antenna panel may be used for downlink channel/signal transmission in the downlink symbol. When an UL is included in the i-th antenna panel, the i-th antenna panel may be used for uplink channel/signal reception in the uplink symbol. When an SBFD_DL is included in the i-th antenna panel, the i-th antenna panel may be used for downlink channel/signal transmission in the SBFD symbol. When an SBFD_UL is included in the i-th antenna panel, the i-th antenna panel may be used for uplink channel/signal reception in the SBFD symbol. For reference, one antenna panel may include maximum one of the SBFD_DL and the SBFD_UL. Both antenna panels may not include an SBFD_DL and an SBFD_UL. That is, when one antenna panel includes an SBFD_DL, the other antenna panel may not include an SBFD_DL, but may include an SBFD_UL.

For example, in the case of the first antenna operation method described above,

- Symbol type that may be used for the first antenna panel. {DL, UL, SBFD_DL}
- Symbol type that may be used for the second antenna panel. {DL, UL, SBFD_UL}

In the case of a second antenna operation method,

- Symbol type that may be used for the first antenna panel. {DL, UL, SBFD_DL}
- Symbol type that may be used for the second antenna panel. {SBFD_UL}

In the case of a third antenna operation method,

- Symbol type that may be used for the first antenna panel. {DL, UL, SBFD_UL}
- Symbol type that may be used for the second antenna panel. {SBFD_DL}

In the case of a fourth antenna operation method,

- Symbol type that may be used for the first antenna panel. {DL, SBFD_DL}
- Symbol types that may be used for the second antenna panel. {UL, SBFD_UL}

In a third method of indicating information on the antenna structure, the base station may instruct to the UE whether antenna panels between symbol types are the same. More specifically, in the third method, the base station may configure the antenna structure to the UE using the following information.

- Whether an antenna panel to be used for downlink transmission in the downlink symbol/slot and an antenna panel to be used for downlink transmission in the SBFD symbol/slot are the same
- Whether an antenna panel to be used for uplink reception in the uplink symbol/slot and an antenna panel to be used for uplink reception in the SBFD symbol/slot are the same

For example, in the case of a first antenna operation method,

- Whether an antenna panel to be used for downlink transmission in the downlink symbol/slot and an antenna panel to be used for downlink transmission in the SBFD symbol/slot are the same = {not the same}
- Whether an antenna panel to be used for uplink reception in the uplink symbol/slot and an antenna panel to be used for uplink reception in the SBFD symbol/slot are the same = {not the same}

In the case of a second antenna operation method,

- Whether an antenna panel to be used for downlink transmission in the downlink symbol/slot and an antenna panel to be used for downlink transmission in the SBFD symbol/slot are the same = {same}
- Whether an antenna panel to be used for uplink reception in the uplink symbol/slot and an antenna panel to be used for uplink reception in the SBFD symbol/slot are the same = {not the same}

In the case of a third antenna operation method,

- Whether an antenna panel to be used for downlink transmission in the downlink symbol/slot and an antenna panel to be used for downlink transmission in the SBFD symbol/slot are the same = {not the same}
- Whether an antenna panel to be used for uplink reception in the uplink symbol/slot and an antenna panel to be used for uplink reception in the SBFD symbol/slot are the same = {same}

In the case of a fourth antenna operation method,

- Whether an antenna panel to be used for downlink transmission in the downlink symbol/slot and an antenna panel to be used for downlink transmission in the SBFD symbol/slot are the same = {same}
- Whether an antenna panel to be used for uplink reception in the uplink symbol/slot and an antenna panel to be used for uplink reception in the SBFD symbol/slot are the same = {same}

For example, information for indicating which antenna mode was used for each symbol type may be referred to as beam related configuration information or QCL related configuration information. The beam related configuration information or QCL related configuration information includes information used in the first to third methods described above, and this is referred to as a beam related configuration or QCL related configuration. The beam related configuration or QCL related configuration may represent an operation method of the base station according to the above-described embodiment. For example, for the first method, each beam related configuration or QCL configuration may correspond to an index of an antenna panel to be used for downlink transmission in a downlink symbol/slot, an index of an antenna panel to be used for uplink transmission in an uplink symbol/slot, and an index of an antenna panel to be used for downlink transmission and an index of an antenna panel to be used for uplink reception in an SBFD symbol/slot. For the second method, each beam related configuration or QCL configuration may correspond to a symbol type that may be used for the first antenna panel and a symbol type that may be used for the second antenna panel. For the third method, each beam related configuration or QCL configuration may correspond to whether an antenna panel to be used for downlink transmission in the downlink symbol/slot and an antenna panel to be used for downlink transmission in the SBFD symbol/slot are the same and whether an antenna panel to be used for uplink reception in the uplink symbol/slot and an antenna panel to be used for uplink reception in the SBFD symbol/slot are the same. However, it should be noted that these names are only described as examples for naming each piece of information and do not limit the scope of the disclosure.

[Embodiment 2: Configuring SBFD antenna to specific symbol]

A method of indicating information on an antenna structure according to the foregoing Embodiment 1 indicated an antenna structure for each symbol type. That is, according to Embodiment 1, all downlink symbols have the same antenna structure, all uplink symbols have the same antenna structure, and all SBFD symbols have the same antenna structure. However, in some situations, symbols may have different antenna structures. Embodiment 2 for this is as follows.

In Embodiment 2 of the disclosure, the base station may instruct the UE to use a specific antenna structure for a specific symbol.

For example, even if the base station uses a second antenna operation method, a third antenna operation method, and a fourth antenna operation method, the base station may use both antenna panels for downlink transmission in a specific downlink symbol. This may be for increasing downlink throughput, downlink reliability, and coverage. Further, even if the base station uses a second antenna operation method, a third antenna operation method, and a fourth antenna operation method, the base station may use both antenna panels for uplink reception in a specific uplink symbol. This may be for increasing uplink throughput, uplink reliability, and coverage.

For example, even if the base station uses a first antenna operating method, a second antenna operating method, a third antenna operating method, and a fourth antenna operating method, the base station may select only one of a downlink and uplink in a specific SBFD symbol to perform transmission or reception. For example, even in an SBFD symbol, in the case that uplink reception is unnecessary or that there is a lot of downlink transmission traffic, only the downlink may be used. In the first antenna operating method, in order to transmit only a downlink in the SBFD symbol, both antenna panels 1 and 2 may be used for downlink channel/signal transmission. Conversely, even in an SBFD symbol, when downlink transmission is unnecessary or in order to further expand uplink coverage, only uplink reception may be used. In the first antenna operating method, in order to transmit only an uplink in the SBFD symbol, both antenna panels 1 and 2 may be used for uplink channel/signal transmission.

In this way, even though the symbol type has been determined according to the instruction of the base station, the UE may use an antenna mode other than the configured antenna mode. Specifically, an antenna mode instruction method may be configured as follows.

In a fourth method of indicating information on an antenna structure, the UE may indicate an index of an antenna panel to be used for downlink or uplink to a specific symbol. More specifically, the fourth method of indicating information on an antenna structure may include the following.

- Index of a symbol to apply information on an antenna structure
- In a symbol to apply information on an antenna structure, an index of an antenna panel to be used for downlink transmission and an index of an antenna panel to be used for uplink reception

For reference, if a symbol to apply information on an antenna structure is a downlink symbol, the symbol to apply may include only an index of the antenna panel to be used for downlink transmission, if a symbol to apply information on an antenna structure is an uplink symbol, the symbol to apply may include only an index of the antenna panel to be used for uplink reception, and if a symbol to apply information on an antenna structure is an SBFD symbol, the symbol to apply may include one of an index of the antenna panel to be used for downlink transmission or an index of an antenna panels to be used for uplink reception.

For reference, a symbol to apply information on an antenna structure may be replaced with a slot to apply, and in this case, a slot to apply information on an antenna structure may perform downlink transmission or uplink reception using the indicated antenna panel.

For reference, a symbol to apply information on an antenna structure may be omitted. In this case, downlink transmission or uplink reception may be performed using an antenna panel indicated in symbols of a predetermined symbol set. For example, the predetermined symbol set may include SBFD symbols. That is, the base station may perform downlink transmission or uplink reception using an antenna panel indicated in SBFD symbols. Here, the predetermined symbol set may be configured by the base station to the UE through a higher layer signal.

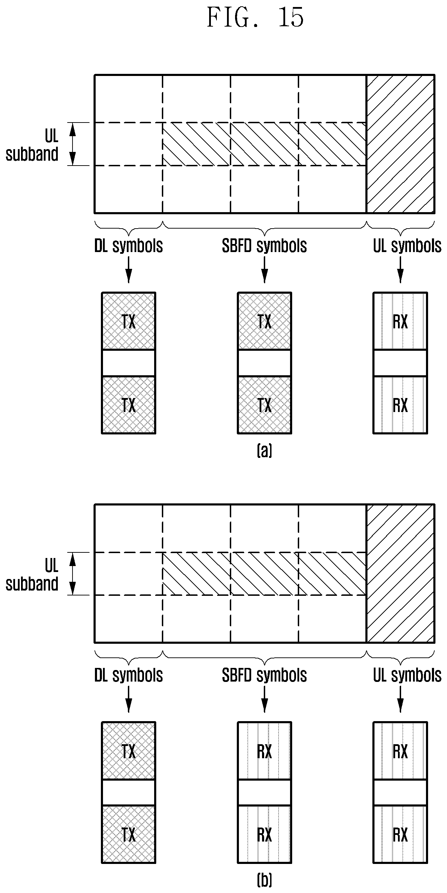

FIG. 15 illustrates an example in which the base station instructs the UE to configure an SBFD antenna for a specific symbol. Here, it is assumed that a first antenna operation method is used. The base station may configure a new antenna operation to the UE instead of an antenna operation configured to the SBFD symbol (according to the first antenna operation method, a first antenna panel is used for downlink transmission and a second antenna panel is used for uplink reception).

With reference to FIG. 15A, the base station may configure both antenna panels to be used for downlink in the SBFD symbol in the same manner as that of the downlink symbol. This is because an UL subband is configured, but there is no uplink channel/signal to be transmitted in the UL subband; thus, there may be no need for an antenna panel for uplink reception. Therefore, by using all antenna panels for a downlink in the same manner as that of the downlink symbol, an increase in downlink coverage and an increase in downlink transmission rate may be expected.

With reference to FIG. 15B, the base station may configure both antenna panels to be used for an uplink in the SBFD symbol in the same manner as that of the uplink symbol. This is because there is no channel/signal to be transmitted to the downlink in the SBFD symbol in which the UL subband is configured; thus, there may be no need for an antenna panel for downlink transmission. Accordingly, by using all antenna panels for an uplink in the same manner as that of the uplink symbol, an increase in uplink coverage and an increase in uplink transmission rate may be expected.

A method in which the base station instructs the UE to configure an SBFD antenna for a specific symbol is as follows.

In a first method, the base station may instruct the UE to configure an SBFD antenna for a specific symbol through UE specific DCI. Here, the UE specific DCI may include a DCI format (DCI format 1_0, 1_1, 1_2) for scheduling a PDSCH or a DCI format (DCI format 0_0, 0_1, 0_2) for scheduling a PUSCH. For reference, the DCI format 1_0 and the DCI format 0_0 are DCI formats using for initial cell access and may not add new functions; thus, they may be excluded.

The UE may receive a DCI format for scheduling a PDSCH. The DCI format may include time domain resource assignment for scheduling a PDSCH. The UE may receive a PDSCH according to the time domain resource assignment. The DCI format may include an SBFD antenna configuration of the base station to be applied when the UE receives a PDSCH. For example, in the foregoing Embodiment 2, a symbol index to apply information on an antenna structure may be a symbol in which a PDSCH is received. In the foregoing Embodiment 2, an index of an antenna panel to be used for downlink transmission in a symbol to apply information on an antenna structure may be indicated through the DCI format.

For example, when the base station uses two panels, the DCI format may include a 2-bit bit field, and a first bit of the 2 bits may indicate whether the base station used a first antenna panel for PDSCH transmission (i.e., '0' for unused, '1' for used), and a second bit thereof may indicate whether the base station used a second antenna panel for PDSCH transmission.

As another example, the DCI format may include an N-bit bit field, and each code point of the bit field may have a corresponding antenna configuration. For example, if N=1 and the 1-bit bit field is '0', it may follow an antenna configuration of the SBFD symbol, and if N=1 and the 1-bit bit field is '1', it may follow an antenna configuration of the DL symbol.

The UE may receive a DCI format for scheduling a PUSCH. The DCI format may include time domain resource assignment for scheduling a PUSCH. The UE may transmit a PUSCH according to the time domain resource assignment. The DCI format may include an SBFD antenna configuration of the base station to apply when the UE transmits a PUSCH. For example, in the foregoing Embodiment 2, a symbol index to apply information on an antenna structure may be a symbol in which a PUSCH is transmitted. In the foregoing Embodiment 2, an antenna panel to be used for uplink transmission in a symbol to apply information on an antenna structure may be indicated through the DCI format.

For example, when the base station uses two panels, the DCI format may include a 2-bit bit field, and a first bit of the 2 bits may indicate whether the base station used a first antenna panel for PUSCH reception (i.e., '0' for not used, '1' for used), and a second bit thereof may indicate whether the base station used a second antenna panel for PUSCH reception.

As another example, the DCI format may include an N-bit bit field, and each code point of the bit field may have a corresponding antenna configuration. For example, if N=1 and the 1-bit bit field is '0', it may follow an antenna configuration of the SBFD symbol, and if N=1 and the 1-bit bit field is '1', it may follow an antenna configuration of the UL symbol.

The drawback of the first method is that it may know only an SBFD antenna configuration of the scheduled symbol. That is, when the UE receives or transmits a channel/signal configured to a higher layer in an unscheduled symbol, the UE may not know which SBFD antenna configuration the base station used. A second method of solving this problem is as follows.

In the second method, an SBFD antenna configuration of a specific symbol may be transmitted through group-common DCI. Here, the group common DCI is transmitted through a PDCCH in which one or more UEs receive simultaneously. That is, one or more UEs receive a PDCCH in the same time-frequency resource and equally use an RNTI value for decoding group-common DCI. The group common DCI may indicate information on an index of a specific symbol to apply information on the antenna structure of Embodiment 2, an index of an antenna panel to be used for downlink transmission in a symbol to apply information on an antenna structure, and an index of an antenna panel to be used for uplink reception.

For example, information for indicating a specific antenna structure in a specific symbol may be referred to as beam related configuration information or QCL related configuration information. The beam related configuration information or the QCL related configuration information includes information used in the fourth method described above, and this is referred to as a beam related configuration or a QCL related configuration. The beam related configuration or the QCL related configuration may indicate an operation method of the base station according to the foregoing embodiment. For example, for the fourth method, each beam related configuration or QCL related configuration may correspond to an index of a symbol to apply information on an antenna structure, and/or an index of an antenna panel to be used for downlink transmission and an index of an antenna panel to be used for uplink reception in a symbol to apply information on an antenna structure. However, it should be noted that these names are merely described as examples for naming each piece of information and do not limit the scope of the disclosure. In [Embodiment 2], beam related configuration information/-beam related configuration and/or QCL related configuration information/QCL related configuration named to indicate a specific antenna structure in a specific symbol may be the same information as the beam related configuration information/beam related configuration and QCL related configuration information/QCL-related configuration of [Embodiment 1] or may be defined as different independent information.

[Embodiment 3: Multiple QCL Indication Method]

<Transmission/Reception based on DCI format>

When the UE receives a PDSCH or transmits a PUSCH using one DCI format, the PDSCH or PUSCH may be scheduled to different symbol types.

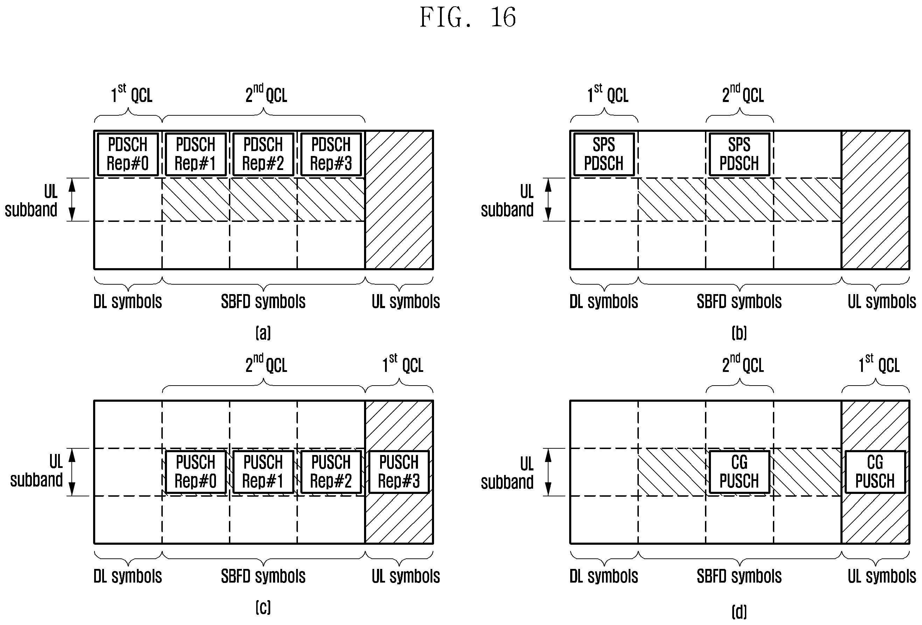

For example, with reference to FIG. 16A, the UE may be instructed to repeatedly receive a PDSCH in a plurality of slots in a DCI format. Here, the UE is instructed to repeatedly receive a PDSCH in four slots through the DCI format, and first PDSCH repeated transmission (PDSCH rep#0) overlaps with a downlink symbol, and the remaining three PDSCH repeated transmissions (PDSCH rep#1, PDSCH rep#2, PDSCH rep#3) overlap with an SBFD symbol. Through the foregoing embodiments, the base station may have different configurations for an antenna panel used in the downlink symbol and an antenna panel used in the SBFD symbol.

For example, when the base station has two antenna panels, both antenna panels may be used for downlink transmission in a downlink symbol, but one of the two antenna panels may be used for downlink transmission in an SBFD symbol. Therefore, beam related information applied in a downlink symbol and beam related information applied in an SBFD symbol may be different from each other. Here, the beam related information may include quasi-co-located (QCL) information. Here, the QCL information may be as follows.

- QCL typeA: {Doppler shift, Doppler spread, average delay, delay spread}
- QCL typeB: {Doppler shift, Doppler spread}
- QCL typeC: {Doppler shit, average delay}
- QCL typeD: {Spatial Rx parameter}

The base station should instruct a beam or QCL assumption appropriate for the downlink symbol and the SBFD symbol to the UE. A method for this is disclosed. For reference, the QCL assumption may be expressed as a transmission configuration indication (TCI).

The base station may instruct two QCL assumptions to the UE through the DCI format. For convenience, a first QCL assumption may be a QCL assumption appropriate for antenna panels to be used for a downlink symbol, and a second QCL assumption may be a QCL assumption appropriate for antenna panels to be used for an SBFD symbol. In the case that the UE receives a DCI format and instructs the DCI format to repeatedly receive a PDSCH in a plurality of slots, a PDSCH overlapping with the downlink symbol may be received by applying the first QCL assumption, and a PDSCH overlapping with the SBFD symbol may be received by applying the second QCL assumption.

A specific method of indicating two QCL assumptions through a DCI format is as follows.

- The DCI format may include an N-bit field. The N-bit field may be a field indicating a QCL assumption to the UE. The base station may configure a table having rows including maximum two QCL assumptions. Here, some rows of the table may include only one QCL assumption, and some other rows may include two QCL assumptions. That is, in the case that the UE is instructed with a code point corresponding to a row including two QCL assumptions in the N-bit field, the UE may acquire two QCL assumptions. For reference, although it was described herein that two QCL assumptions are configured in a row of one table, in another method, the base station may configure two tables including one QCL assumption to the UE. In the two tables, two QCL assumptions may be acquired in rows corresponding to code points of the N-bit field.
- The DCI format may include an N-bit field. The N-bit field may be a field indicating a QCL assumption to the UE. The base station may configure a table having a row including one QCL assumption. The one QCL assumption may be a QCL assumption to be used for a first symbol type (e.g., downlink symbol or SBFD symbol). The base station may configure a QCL assumption to be used for a second symbol type (e.g., SBFD symbol or downlink symbol) corresponding to a QCL assumption to be used for the first symbol type, by a higher layer signal. The UE may acquire a QCL assumption to be used for the first symbol type in a row of the table corresponding to a code point indicated by the N-bit field. Further, the UE may acquire a QCL assumption to be used for the second symbol type corresponding to the indicated QCL assumption, by a higher layer signal.

Although the foregoing Embodiment 3 described PDSCH reception of the UE, the same method may be applied to reception of other channels.

In the foregoing Embodiment 3, N-bits for indicating QCL assumption were described, but a QCL assumption of N-bits through a DCI format may be indicated through a transmission configuration indication (TCI) field of a DCI format for scheduling a downlink PDSCH or through an SRS resource indicator (SRI) field of a DCI format for scheduling an uplink PDSCH. Accordingly, the UE may acquire multiple QCL assumptions through multiple TCI fields (each TCI field corresponds to a QCL assumption of each symbol type) or multiple SRI fields (each SRI field corresponds to a QCL assumption of each symbol type) in a DCI format.

With reference to FIG. 16B, when the UE receives a DCI format (DCI format 1_0, 1_1, or 1_2) that activates an SPS PDSCH, the UE may periodically receive a PDSCH. In this case, some SPS PDSCHs may overlap with downlink symbols, and other SPS PDSCHs may overlap with SBFD symbols. Accordingly, similar to the case that one DCI format repeatedly receives a PDSCH, applied beam related information in the downlink symbol and applied beam related information in the SBFD symbol may be different from each other.

With reference to FIG. 16C, when the UE receives a DCI format for repeatedly transmitting a PUSCH, the UE should repeatedly transmit the PUSCH in a plurality of slots. Similar to PDSCH repeated transmission, some of repeatedly transmitted PUSCHs may overlap with uplink symbols, and some other thereof may overlap with SBFD symbols. Because applied beam related information in the uplink symbol and applied beam related information in the SBFD symbol may be different from each other, multiple QCL assumptions may be required.

With reference to FIG. 16D, when the UE receives a DCI format (DCI format 0_0, 0_1, or 0_2) that activates a CG PUSCH, the UE may periodically transmit a PUSCH. Similar to SPS PDSCH reception, some of CG PUSCHs may overlap with uplink symbols, and some other thereof may overlap with SBFD symbols. Because applied beam related information in the uplink symbols and applied beam related information in the SBFD symbols may be different from each other, multiple QCL assumptions may be required.

For reference, Embodiment 3 may be applied to DCI that schedule one PDSCH or one PUSCH.

<Transmission/Reception configured to upper layer>

The foregoing examples (FIGS. 16A, 16B, 16C, and 16D) are cases that transmission or reception is indicated in a DCI format. Further, there may be channels or signals in which transmission or reception is indicated to a higher layer. The channels or signals in which transmission or reception is indicated to a higher layer may include, for example, a PDCCH and CSI-RS in which the UE receives in the downlink, and an SRS in which the UE transmits in the uplink. Even in the case of channels or signals in which transmission or reception is indicated to a higher layer, some thereof may overlap with SBFD symbols, and the remaining some thereof may overlap with symbols (i.e., downlink symbols or uplink symbols) other than SBFD symbols. In this case, the base station may include maximum two QCL assumptions when configuring the channel/signal.

In the case of a PDCCH, different QCL assumptions may be used according to the type of a search space.

Here, the type of a search space may include at least following types:

- Type0 common search space: Includes a PDCCH that schedules a PDSCH transferring SIB1.
- Type0A common search space: Includes a PDCCH that schedules a PDSCH transferring other system information blocks, except for SIB1.
- Type 1 common search space: Includes a PDCCH for cell random access
- Type2 common search space: Includes a PDCCH related to paging
- Type3 common search space: Includes a group common PDCCH

Here, some search spaces include a PDCCH that transfers key information of the system. For example, Type0, 0A, 1, and 2 may be determined as PDCCHs that transfer key information of the cell. The UE may always use an antenna configuration corresponding to a downlink symbol for a symbol that receives the PDCCH regardless of the symbol type. This is because the antenna configuration corresponding to the downlink symbol may guarantee higher downlink coverage and reception signal quality than that corresponding to the SBFD symbol.

In the case of a CSI-RS, different QCL assumptions may be used according to use of the CSI-RS.

For example, when using a CSI-RS for tracking RS (TRS) use, the CSI-RS should guarantee high downlink coverage and reception signal quality. Therefore, similar to the PDCCH that transfers key information of the system, a symbol in which the CSI-RS using for TRS use is configured may use an antenna configuration corresponding to the downlink symbol regardless of the symbol type.

<Beam Limit>

In the disclosure, the UE may receive a configuration of a correlation between a beam (QCL assumption) available for a first symbol type (e.g., downlink symbol) and a beam (QCL assumption) available for a second symbol type (e.g., SBFD symbol).

More specifically, the UE may be configured such that some of beams (QCL assumption) available in the first symbol type (downlink symbol) may not be used in the second symbol type (SBFD symbol). For example, in the case that the number of beams available in the first symbol type is 8 (indices 0, 1,..., 7), the UE may be configured such that some beams (e.g., indices 0, 3, 6, 7) of 8 beams may not be used in the second symbol type. Further, the UE may be configured such that some of beams (QCL assumption) available in the first symbol type (downlink symbol) may be used in the second symbol type (SBFD symbol). For example, in the case that the number of beams available in the first symbol type is 8 (indices 0, 1,..., 7), the UE may be configured such that some beams (e.g., indices 1, 2, 4, 5) of 8 beams may be used in the second symbol type.

In an another method, the UE may be instructed the number equal to or less than the number of beams (QCL assumption) available in the first symbol type (downlink symbol) as the number of beams (QCL assumption) available in the second symbol type (SBFD symbol). For example, in the case that the number of beams (QCL assumption) available in the first symbol type (downlink symbol) is 8, indices of the beams may be 0, 1, 2, 3, 4, 5, 6, and 7. The UE may be instructed the number of beams (QCL assumption) available in the second symbol type (SBFD symbol) as 4. In this case, beams with indices 0, 1, 2, and 3 may be used in the second symbol type (SBFD symbol).

The UE may expect to be instructed to only beams that may be received in the second symbol type (SBFD symbol). In the case that a beam in which the UE does not expect to be instructed in the second symbol type is instructed, an operation of the UE may be at least one of the following operations:

- The UE may not perform reception or transmission in the second symbol type. For PDSCH repeated transmission or PUSCH repeated transmission, in the case that the UE does not perform reception or transmission in the second symbol type of a slot, the UE may not count the slot as the number of repetitions. For example, in the case of 4 repeated transmissions, the UE may select 4 slots excluding the slot to repeatedly receive a PDSCH or repeatedly transmit a PUSCH.

- The UE may perform reception or transmission in the second symbol type, but may change to a beam available in the second symbol type to perform reception or transmission. Here, the beam available in the second symbol type may be a beam preconfigured by the base station or a beam with the lowest index among beams available in the second symbol type.

- The UE may perform reception or transmission with a non-transmittable beam indicated in the second symbol type, but may use low transmission power in the symbol of the second symbol type. That is, when transmitting with a non-transmittable beam compared to a transmittable beam, transmission power may be reduced by offset, or maximum transmission power may be limited. The offset or the maximum transmission power may be configured by the base station.

In the disclosure, there may be no correlation between a beam (QCL assumption) available in the first symbol type (downlink symbol) and a beam (QCL assumption) available in the second symbol type (SBFD symbol). That is, the UE may separately receive a configuration of a beam (QCL assumption) available in the first symbol type (downlink symbol) and a beam (QCL assumption) available in the second symbol type (SBFD symbol) from the base station.

[Embodiment 4: method of using other power offsets]

In another embodiment of the disclosure, the UE may use different power offset values according to an SBFD antenna mode. For example, it is assumed that a first antenna operation method is used. A downlink channel/signal transmitted by the base station in a DL symbol and a downlink channel/signal transmitted in an SBFD symbol may be transmitted through different antenna panels. Therefore, even if the base station transmits with the same baseband transmission power, RF power actually transmitted to the antenna may be different according to the transmitting antenna panel. Therefore, when the UE receives a measurement signal and reports a quality of the measurement signal to the base station, even if the base station transmits a measurement signal with the same baseband transmission power, the UE may receive the measurement signal with different reception power according to an antenna operation method. That is, the UE may receive a measurement signal transmitted by the base station from a specific antenna panel at a louder level than that of a measurement signal transmitted from another specific antenna panel, which may deteriorate a quality of the measurement signal.

Here, the measurement signal may be an SSB or CSI-RS.

In Embodiment 4 of the disclosure, the base station may configure power offset for each antenna operation. Considering Embodiment 1, because the base station determines an antenna operation for each symbol type, different power offsets may be configured according to a symbol type. For example, power offset of 0 dB may be configured to a DL symbol, and power offset of 3 dB may be configured to an SBFD symbol. In this case, in the case that a measurement signal (SSB or CSI-RS) is received in the DL symbol, power offset (0 dB) of the DL symbol may be added to the measurement, and in the case that a measurement signal (SSB or CSI-RS) is received in the SBFD symbol, power offset (3 dB) of the SBFD symbol may be added to the measurement. Therefore, the offset may offset the difference in RF transmission power of the base station.

The above description was described based on the Embodiment 1, but it may be applied to the Embodiment 2. According to the Embodiment 2, a specific antenna structure may be used for a specific symbol. Accordingly, a different power offset value may be configured and applied to the specific symbol. For example, even if a symbol in which a measurement signal is received is an SBFD symbol, in the case that the symbol is instructed to use the same antenna structure as that of the DL symbol, a power offset value of the DL symbol may be used.

The disclosure proposes an antenna mode selection method in a subband nonoverlapping full duplex (SBFD).

The base station may use different antenna structures according to an SBFD transmission method. In the disclosure, there is assumed an environment in which the base station uses a first antenna structure for a DL-only symbol in which all RBs in one symbol are DL for downlink transmission, and uses a second antenna structure for an SBFD symbol in which some RBs in one symbol are used as DL and in which other some RBs are used as UL, and in which a difference in transmission power and antenna gain occurs due to the difference between the first and second antenna structures.

The disclosure discloses a method for the base station to instruct a pattern of an antenna structure to the UE. The pattern of the antenna structure may be included in UE-specific DCI or a group-common DCI that schedules a PDSCH and transmitted.

In the disclosure, in the case that the base station schedules PDSCH repeated reception across DL-only symbols and SBFD symbols or configures SPS PDSCH reception and PDCCH reception to the UE, the base station may simultaneously transmit reception configuration information appropriate for a first antenna structure of a DL-only symbol and reception configuration information appropriate for a second antenna structure of an SBFD symbol in a single DCI format. The information may be information on TCI or QCL assumptions.

In the disclosure, the base station may configure power offset of each measurement signal for the measurement signal to the UE. The UE may adjust the magnitude of the measurement signal according to the power offset to perform accumulation and comparison of the measurement signal. The power offset of the measurement signal may be associated with an antenna structure in which the measurement signal was transmitted.

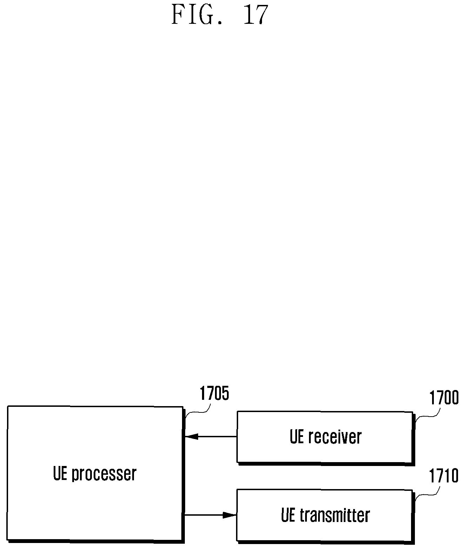

FIG. 17 is a diagram illustrating a structure of a UE in a wireless communication system according to an embodiment of the disclosure.

With reference to FIG. 17, the UE may include a transceiver referring to a UE receiver 1700 and a UE transmitter 1710, a memory (not illustrated), and a UE processer 1705 (or UE controller or processor). According to the above-described communication method of the UE, the UE transceivers 1700 and 1710, the memory, and the UE processer 1705 may operate. However, the components of the UE are not limited to the examples described above. For example, the UE may include more or fewer components than the above-described components. Further, the transceiver, the memory, and the processor may be implemented in the form of a single chip.

The transceiver may transmit and receive a signal to and from the base station. Here, the signal may include control information and data. To this end, the transceiver may include an RF transmitter for up-converting and amplifying a frequency of a signal to be transmitted, and an RF receiver for low-noise amplifying the received signal and down-converting a frequency thereof. However, this is only an embodiment of the transceiver, and the components of the transceiver are not limited to the RF transmitter and the RF receiver.

Further, the transceiver may receive a signal through a wireless channel, output the signal to the processor, and transmit the signal output from the processor through the wireless channel.

The memory may store programs and data necessary for an operation of the UE. Further, the memory may store control information or data included in signals transmitted and received by the UE. The memory may be composed of storage media such as a read only memory (ROM), a random an access memory (RAM), a hard disk, a compact disc-ROM (CD-ROM), and a digital versatile disc (DVD), or a combination of storage media. Further, there may be a plurality of memories.

Further, the processor may control a series of processes so that the UE may operate according to the above-described embodiment. For example, the processor may receive DCI composed of two layers and control components of the UE to simultaneously receive multiple PDSCHs. There may be a plurality of processors, and the processor may execute a program stored in the memory to perform a component control operation of the UE.

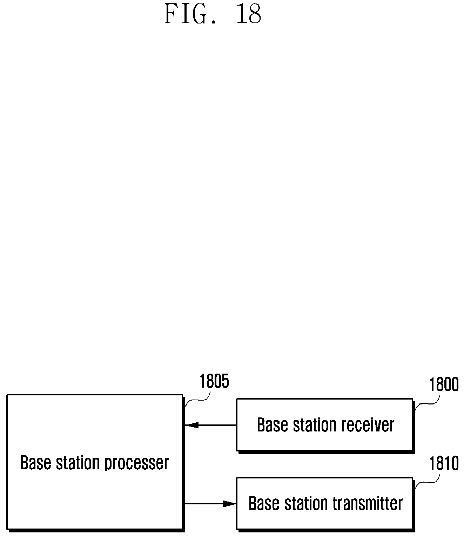

FIG. 18 is a diagram illustrating a structure of a base station in a wireless communication system according to an embodiment of the disclosure.

With reference to FIG. 18, the base station may include a transceiver referring to a base station receiver 1800 and a base station transmitter 1810, a memory (not illustrated), and a base station processer 1805 (or base station controller or processor). According to the above-described communication method of the base station, the base station transceivers 1800 and 1810, the memory, and the base station processer 1805 may operate. However, the components of the base station are not limited to the above examples. For example, the base station may include more or fewer components than the above-described components. Further, the transceiver, the memory, and the processor may be implemented in the form of a single chip.

The transceiver may transmit and receive a signal to and from the UE. Here, the signal may include control information and data. To this end, the transceiver may include an RF transmitter for up-converting and amplifying a frequency of a signal to be transmitted, and an RF receiver for low-noise amplifying the received signal and down-converting a frequency thereof. However, this is only an embodiment of the transceiver, and the components of the transceiver are not limited to the RF transmitter and the RF receiver.

Further, the transceiver may receive a signal through a wireless channel, output the signal to the processor, and transmit the signal output from the processor through the wireless channel.

The memory may store programs and data necessary for an operation of the base station. Further, the memory may store control information or data included in signals transmitted and received by the base station. The memory may be composed of storage media such as a ROM, a RAM, a hard disk, a CD-ROM, and a DVD, or a combination of storage media. Further, there may be a plurality of memories.

The processor may control a series of processes so that the base station may operate according to the above-described embodiment of the disclosure. For example, the processor may constitute two layers of DCI including allocation information on multiple PDSCHs and control each component of the base station so as to transmit them. There may be a plurality of processors, and the processor may execute a program stored in the memory to perform a component control operation of the base station.

Methods according to the embodiments described in the claims or specifications of the disclosure may be implemented in the form of hardware, software, or a combination of hardware and software.

In the case of being implemented in software, a computer readable storage medium storing one or more programs (software modules) may be provided. One or more programs stored in the computer readable storage medium are configured for execution by one or more processors in an electronic device. The one or more programs include instructions for causing the electronic device to execute methods according to embodiments described in a claim or specification of the disclosure.

Such programs (software modules, software) may be stored in a random access memory, a non-volatile memory including a flash memory, a read only memory (ROM), an electrically erasable programmable ROM (EEPROM), a magnetic disc storage device, a compact disc-ROM (CD-ROM), digital versatile discs (DVDs), any other form of optical storage device, or a magnetic cassette. Alternatively, the programs may be stored in a memory composed of a combination of some or all thereof. Further, each constitution memory may be included in the plural.

Further, the program may be stored in an attachable storage device that may access through a communication network such as the Internet, Intranet, local area network (LAN), wide LAN (WLAN), or storage area network (SAN), or a communication network composed of a combination thereof. Such a storage device may access a device implementing an embodiment of the disclosure through an external port. Further, a separate storage device on a communication network may access a device implementing the embodiment of the disclosure.

In the specific embodiments of the disclosure described above, components included in the disclosure are expressed in the singular or plural according to the presented specific embodiments. However, the singular or plural expression is appropriately selected for a situation presented for convenience of description, and the disclosure is not limited to the singular or plural components, and even if a component is represented in the plural, it may be composed of the singular, or even if a component is represented in the singular, it may be composed of the plural.

Embodiments of the disclosure disclosed in this specification and drawings merely present specific examples in order to easily describe the technical contents of the disclosure and help the understanding of the disclosure, and they are not intended to limit the scope of the disclosure. That is, it will be apparent to those of ordinary skill in the art to which the disclosure pertains that other modifications based on the technical spirit of the disclosure may be implemented. Further, each of the above embodiments may be operated in combination with each other, as needed. For example, the base station and the UE may be operated by combining parts of an embodiment and another embodiment of the disclosure with each other. For example, the base station and the UE may be operated by combining parts of Embodiment 1, Embodiment 2, and Embodiment 3 of the disclosure with each other.

In the drawings for describing the method of the disclosure, the order of description does not necessarily correspond to the order of execution, and the precedence relationship may be changed or may be executed in parallel.

Alternatively, the drawings illustrating the method of the disclosure may omit some components and include only some components within the scope that does not impair the essence of the disclosure.

Further, the method of the disclosure may be implemented in a combination of some or all of the contents included in each embodiment within the scope that does not impair the essence of the disclosure.

Various embodiments of the disclosure have been described above. The above description of the disclosure is for illustrative purposes, and the embodiments of the disclosure are not limited to the disclosed embodiments. A person skilled in the art to which the disclosure pertains will understand that the disclosure may be easily modified into another specific form without changing technical idea or essential features thereof. The scope of the disclosure is represented by the claims to be described later rather than the above detailed description, and all changes or modified forms derived from the meaning and scope of the claims and equivalent concepts thereof should be construed as being included in the scope of the disclosure.

**Claims**

1. A method performed by a terminal of a communication system, the method comprising:

    receiving first beam related configuration information from a base station;
    identifying a beam related configuration for each symbol based on the first beam related configuration information;
    receiving a downlink in a first symbol based on a beam related configuration related to the first symbol; and
    transmitting an uplink in a second symbol based on a beam related configuration related to the second symbol,
    wherein the first symbol is configured to correspond to a downlink symbol or a subband nonoverlapping full duplex (SBFD) symbol,
    the second symbol is configured to correspond to an uplink symbol or the SBFD symbol, and
    the first beam related configuration information comprises at least one of a first beam related configuration corresponding to an operation of the base station related to the downlink symbol, a second beam related configuration corresponding to an operation of the base station related to the uplink symbol, or a third beam related configuration corresponding to an operation of the base station related to the SBFD symbol.

2. The method of claim 1, further comprising receiving second beam related configuration information on a third symbol, wherein the second beam related configuration information comprises:

an index indicating the third symbol; and
an index of a beam related configuration corresponding to an operation of the base station related to the third symbol.

3. The method of claim 1, wherein in the case that the first symbol corresponds to the downlink symbol, the downlink is received based on a first quasi-co location (QCL) assumption,

in the case that the first symbol corresponds to the SBFD symbol, the downlink is received based on a second QCL assumption,
in the case that the second symbol corresponds to the uplink symbol, the uplink is transmitted based on a third QCL assumption, and
in the case that the second symbol corresponds to the SBFD symbol, the uplink is transmitted based on a fourth QCL assumption.

4. The method of claim 1, further comprising:

receiving a measurement signal in the first symbol; and
measuring a channel state based on the measurement signal,
wherein the channel state is measured based on first power offset in the case that the first symbol corresponds to the downlink symbol and is measured based on second power offset in the case that the first symbol corresponds to the SBFD symbol.

5. The method of claim 1, wherein the operation of the base station related to the downlink symbol is associated with an antenna panel of the base station used in the downlink symbol,

the operation of the base station related to the uplink symbol is associated with an antenna panel of the base station used in the uplink symbol, and
the operation of the base station related to the SBFD symbol is associated with an antenna panel of the base station used in the SBFD symbol.

6. A method performed by a base station of a communication system, the method comprising:

transmitting first beam related configuration information to a terminal;
identifying a beam related configuration for each symbol according to the first beam related configuration information;
transmitting a downlink in a first symbol based on a beam related configuration related to the first symbol; and
receiving an uplink in a second symbol based on a beam related configuration related to the second symbol,
wherein the first symbol is configured to correspond to a downlink symbol or a subband nonoverlapping full duplex (SBFD) symbol,
the second symbol is configured to correspond to an uplink symbol or the SBFD symbol, and
the first beam related configuration information comprises at least one of a first beam related configuration corresponding to an operation of the base station related to the downlink symbol, a second beam related configuration corresponding to an operation of the base station related to the uplink symbol, or a third beam related configuration corresponding to an operation of the base station related to the SBFD symbol.

7. The method of claim 6, further comprising transmitting second beam related configuration information on a third symbol,
wherein the second beam related configuration information comprises:

an index indicating the third symbol; and
an index of a beam related configuration corresponding to an operation of the base station related to the third symbol.

8. The method of claim 6, wherein in the case that the first symbol corresponds to the downlink symbol, the downlink is transmitted based on a first quasi-co location (QCL) assumption,

in the case that the first symbol corresponds to the SBFD symbol, the downlink is transmitted based on a second QCL assumption,

in the case that the second symbol corresponds to the uplink symbol, the uplink is received based on a third QCL assumption, and

in the case that the second symbol corresponds to the SBFD symbol, the uplink is received based on a fourth QCL assumption.

9. The method of claim 6, further comprising transmitting a measurement signal in the first symbol, wherein a channel state is measured based on the measurement signal,

the channel state is measured based on first power offset in the case that the first symbol corresponds to the downlink symbol, and is measured based on second power offset in the case that the first symbol corresponds to the SBFD symbol.

10. The method of claim 6, wherein the operation of the base station related to the downlink symbol is associated with an antenna panel of the base station used in the downlink symbol,

the operation of the base station related to the uplink symbol is associated with an antenna panel of the base station used in the uplink symbol, and

the operation of the base station related to the SBFD symbol is associated with an antenna panel of the base station used in the SBFD symbol.

11. A terminal of a communication system, the terminal comprising:

a transceiver; and
a controller,
wherein the controller is configured to:

receive first beam related configuration information from a base station,
identify a beam related configuration for each symbol based on the first beam related configuration information,
receive a downlink in a first symbol based on a beam related configuration related to the first symbol, and
transmit an uplink in a second symbol based on a beam related configuration related to the second symbol,
wherein the first symbol is configured to correspond to a downlink symbol or a subband nonoverlapping full duplex (SBFD) symbol,
the second symbol is configured to correspond to an uplink symbol or the SBFD symbol, and
the first beam related configuration information comprises at least one of a first beam related configuration corresponding to an operation of the base station related to the downlink symbol, a second beam related configuration corresponding to an operation of the base station related to the uplink symbol, or a third beam related configuration corresponding to an operation of the base station related to the SBFD symbol.

12. The terminal of claim 11, wherein the controller is further configured to receive second beam related configuration information on a third symbol,
the second beam related configuration information comprises:

an index indicating the third symbol; and
an index of a beam related configuration corresponding to an operation of the base station related to the third symbol.

13. The terminal of claim 11, wherein in the case that the first symbol corresponds to the downlink symbol, the downlink is received based on a first quasi-co location (QCL) assumption,

in the case that the first symbol corresponds to the SBFD symbol, the downlink is received based on a second QCL assumption,

in the case that the second symbol corresponds to the uplink symbol, the uplink is transmitted based on a third QCL assumption, and

in the case that the second symbol corresponds to the SBFD symbol, the uplink is transmitted based on a fourth QCL assumption.

14. The terminal of claim 11, wherein the controller is further configured to:

receive a measurement signal in the first symbol, and

measure a channel state based on the measurement signal, and

the channel state is measured based on first power offset in the case that the first symbol corresponds to the downlink symbol, and is measured based on second power offset in the case that the first symbol corresponds to the SBFD symbol.

15. A base station of a communication system, the base station comprising:

a transceiver; and

a controller,

wherein the controller is configured to:

transmit first beam related configuration information to a terminal,

identify a beam related configuration for each symbol according to the first beam related configuration information,

transmit a downlink in a first symbol based on a beam related configuration related to the first symbol, and

receive an uplink in a second symbol based on a beam related configuration related to the second symbol,

wherein the first symbol is configured to correspond to a downlink symbol or a subband nonoverlapping full duplex (SBFD) symbol,

the second symbol is configured to correspond to an uplink symbol or the SBFD symbol, and

the first beam related configuration information comprises at least one of a first beam related configuration corresponding to an operation of the base station related to the downlink symbol, a second beam related configuration corresponding to an operation of the base station related to the uplink symbol, or a third beam related configuration corresponding to an operation of the base station related to the SBFD symbol.

# FIG. 1

One subframe [110]

$N_{symb}^{subframe,\mu}$ OFDM symbols

1 OFDM symbols [102]

1 subcarrier [103]

$k = N_{RB,x}^{max,\mu} N_{sc}^{RB} - 1$

$N_{RB}^{\mu} N_{sc}^{RB}$ subcarriers

Resource block $N_{sc}^{RB}$ subcarriers [104]

Resource element [k,l] [101]

Frequency

$k=0$

$\bar{l}=0$

$\bar{l}=14 \cdot 2^{\mu} - 1$

Time

# FIG. 2

EP 4 580 081 A1

FIG. 3

BWP#1
(301)

BWP#2
(302)

UE bandwidth
(300)

Frequency

## FIG. 4

duration (404)

Frequecy resources (403)

UE bandwidth part (410)

Frequency

Time

Slot (420)

Control resource set#1 (401)

Control resource set#2 (402)

EP 4 580 081 A1

FIG. 5

1 symbol
(501)

1 PRB
(502)

DMRS
(505)

CCE
(504)

REG
(503)

# FIG. 6

# FIG. 7

| RA type 0<br>(7-00) | Bitmap | | 7-15 |
|---|---|---|---|

| RA type 1<br>(7-05) | Starting VRB (7-20) | Length (7-25) |
|---|---|---|

| Both RA type 0 & 1<br>(7-10) | 1 bit for RA type indication (7-30) | Max (payload for RA type 0, payload for RA type 1) (7-35) |
|---|---|---|

FIG. 8

S [8-00]

L [8-05]

OFDM symbol

$$\text{Slot}\left\lfloor n \cdot \frac{2^{\mu_{PDSCH}}}{2^{\mu_{PDCCH}}} \right\rfloor + K_0 \ [8\text{-}10]$$

| 0 | 1 | 2 | 3 | 4 | 5 | 6 | 7 | 8 | 9 | 10 | 11 | 12 | 13 |

# FIG. 9

(9-00)

$\mu_{PDCCH} = 1$

| PDCCH | |
|---|---|

Slot n     Slot n + 1       ...       $t$

$\mu_{PDSCH} = 1$

PDSCH

$t$

...     Slot n + $K_0$

(9-05)

$\mu_{PDCCH} = 1$

PDCCH

Slot n     Slot n + 1     ...     $t$

$\mu_{PDSCH} = 2$

PDSCH

$t$

Slot $\left\lfloor n \cdot \dfrac{2^{\mu_{PDSCH}}}{2^{\mu_{PDCCH}}} \right\rfloor$     ...     Slot $\left\lfloor n \cdot \dfrac{2^{\mu_{PDSCH}}}{2^{\mu_{PDCCH}}} \right\rfloor + K_0$

# FIG. 10

**Single cell LTE/NR (S00)**

**gNB**
- SDAP (S25)
- PDCP (S30)
- RLC (S35)
- MAC (S40)
- PHY (S45)

**UE**
- PHY (S50)
- MAC (S55)
- RLC (S60)
- PDCP (S65)
- SDAP (S70)

**Carrier aggregation (S10)**

**gNB**
- SDAP
- PDCP
- RLC
- MAC
- PHY  ...  PHY

**UE**
- PHY  ...  PHY
- MAC
- RLC
- PDCP
- SDAP

**Dual connectivity (S20)**

**MgNB**
- SDAP
- PDCP
- RLC
- MAC
- PHY

**SgNB**
- RLC
- MAC
- PHY

**UE**
- PHY
- MAC
- RLC
- PDCP
- SDAP

**SgNB**
- PHY
- MAC
- RLC

EP 4 580 081 A1

# FIG. 11

TDD periodicity

D D D S U D D D S U D D D S U D D D S U

1101  (a) TDD only configuration

TDD periodicity

D D D S U D D D S U D D D S U D D D S U

UL
subband
(1110)

1112  1111  (b) SBFD configuration 1

TDD periodicity

D D D S U D D D S U D D D S U D D D S U

UL
subband
(1120)

1122  1121  (c) SBFD configuration 2

TDD periodicity

D D D S U D D D S U D D D S U D D D S U

1132 1133 1134 1131  (d) SBFD configuration 3

FIG. 12

# FIG. 13

TDD periodicity

D   D   D   S   U

DL symbols          UL symbols

1st antenna panel  TX          RX

2nd antenna panel  TX          RX

# FIG. 14

UL subband

DL symbols    SBFD symbols    UL symbols

1st antenna panel

2nd antenna panel

TX    TX    RX

TX    RX    RX

(a) Antenna operation 1

1st antenna panel

2nd antenna panel

TX    TX    RX

off    RX    off

(b) Antenna operation 2

1st antenna panel

2nd antenna panel

TX    RX    RX

off    TX    off

(c) Antenna operation 3

1st antenna panel

2nd antenna panel

TX    TX    off

off    RX    RX

(d) Antenna operation 4

# FIG. 15

UL
subband

DL symbols   SBFD symbols   UL symbols

TX

TX

TX

TX

RX

RX

(a)

UL
subband

DL symbols   SBFD symbols   UL symbols

TX

TX

RX

RX

RX

RX

(b)

FIG. 16

FIG. 17

UE processer — 1705

UE receiver — 1700

UE transmitter — 1710

FIG. 18

1805

Base station processer

1800

Base station receiver

1810

Base station transmitter

## INTERNATIONAL SEARCH REPORT

| International application No. |
| --- |
| **PCT/KR2023/015098** |

| A. | CLASSIFICATION OF SUBJECT MATTER |
| --- | --- |

**H04B 7/06**(2006.01)i; **H04B 7/08**(2006.01)i; **H04L 5/14**(2006.01)i; **H04W 88/08**(2009.01)i

According to International Patent Classification (IPC) or to both national classification and IPC

| B. | FIELDS SEARCHED |
| --- | --- |

Minimum documentation searched (classification system followed by classification symbols)

H04B 7/06(2006.01); H04B 7/02(2006.01); H04L 12/24(2006.01); H04L 5/14(2006.01); H04W 16/28(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제1 빔 관련 설정 정보(configuration information related to the first beam), 심볼 별 빔 관련 설정(beam-related configuration for each symbol), 하향링크 심볼(downlink symbol), SBFD 심볼(subband non-overlapping full duplex symbol), 상향링크 심볼(uplink symbol)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2021-0344558 A1 (SAMSUNG ELECTRONICS CO., LTD.) 04 November 2021 (2021-11-04) See paragraphs [0107]-[0117] and [0149]; and figures 7-10. | 1-2,5-7,10-12,15 |
| A | | 3-4,8-9,13-14 |
| A | US 2020-0052756 A1 (QUALCOMM INCORPORATED) 13 February 2020 (2020-02-13) See paragraphs [0094]-[0097]; and figure 7. | 1-15 |
| A | KR 10-2021-0019502 A (GOOGLE LLC) 22 February 2021 (2021-02-22) See paragraphs [0043]-[0047]; and figure 4. | 1-15 |
| A | CN 113259952 A (VIVO MOBILE COMMUNICATION CO., LTD.) 13 August 2021 (2021-08-13) See claims 1-5. | 1-15 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **07 January 2024** | **08 January 2024** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/015098** |

### C.    DOCUMENTS CONSIDERED TO BE RELEVANT

| Category* | Citation of document, with indication, where appropriate, of the relevant passages | Relevant to claim No. |
| --- | --- | --- |
| A | KR 10-2013-0008468 A (ELECTRONICS AND TELECOMMUNICATIONS RESEARCH INSTITUTE) 22 January 2013 (2013-01-22) <br> See paragraphs [0150]-[0167]; and figure 5. | 1-15 |

Form PCT/ISA/210 (second sheet) (July 2022)

## INTERNATIONAL SEARCH REPORT
### Information on patent family members

International application No.

**PCT/KR2023/015098**

| Patent document cited in search report | | | Publication date (day/month/year) | Patent family member(s) | | | Publication date (day/month/year) |
|---|---|---|---|---|---|---|---|
| US | 2021-0344558 | A1 | 04 November 2021 | CN | 115486174 | A | 16 December 2022 |
| | | | | EP | 4108028 | A1 | 28 December 2022 |
| | | | | EP | 4108028 | A4 | 23 August 2023 |
| | | | | KR | 10-2023-0005200 | A | 09 January 2023 |
| | | | | WO | 2021-221466 | A1 | 04 November 2021 |
| US | 2020-0052756 | A1 | 13 February 2020 | CN | 112567643 | A | 26 March 2021 |
| | | | | EP | 3834304 | A1 | 16 June 2021 |
| | | | | US | 11228353 | B2 | 18 January 2022 |
| | | | | WO | 2020-033678 | A1 | 13 February 2020 |
| KR | 10-2021-0019502 | A | 22 February 2021 | CN | 112219357 | A | 12 January 2021 |
| | | | | EP | 3808004 | A1 | 21 April 2021 |
| | | | | US | 11424799 | B2 | 23 August 2022 |
| | | | | US | 2021-0211171 | A1 | 08 July 2021 |
| | | | | WO | 2019-240903 | A1 | 19 December 2019 |
| CN | 113259952 | A | 13 August 2021 | CN | 113259952 | B | 15 July 2022 |
| | | | | CN | 115226117 | A | 21 October 2022 |
| | | | | EP | 4102874 | A1 | 14 December 2022 |
| | | | | EP | 4102874 | A4 | 04 October 2023 |
| | | | | JP | 2023-512808 | A | 29 March 2023 |
| | | | | KR | 10-2022-0137739 | A | 12 October 2022 |
| | | | | US | 2022-0368493 | A1 | 17 November 2022 |
| | | | | WO | 2021-155768 | A1 | 12 August 2021 |
| KR | 10-2013-0008468 | A | 22 January 2013 | KR | 10-1896001 | B1 | 06 September 2018 |
| | | | | US | 2013-0021929 | A1 | 24 January 2013 |
| | | | | US | 2015-0263836 | A1 | 17 September 2015 |

Form PCT/ISA/210 (patent family annex) (July 2022)